# EUROPEAN PATENT APPLICATION

(11) **EP 1 058 413 A2**
(43) Date of publication of application: **06.12.2000**
(21) Application number: 00304695.0
(22) Date of filing: 02.06.2000
(51) Int. Cl.: H04B 10/17, H01S 3/067

(54) **Gain-flattening optical amplifier**

(30) Priority: 04.06.1999 JP 15801499
(71) Applicant: NEC Corporation, Minato-ku, Tokyo 108-8001 (JP)
(72) Inventor: Michishita, Yukio, Minato-ku, Tokyo (JP)
(74) Representative: Abnett, Richard Charles

(57) **Abstract**

A gain-flattening optical amplifier which enables a gain tilt to be diminished on the occasion of wavelength division multiplexing transmission, and which enables output constant control to be executed on the occasion of execution of gain-flattening control, further system design thereof is facilitated is provided. In the gain-flattening optical amplifier for use in wavelength division multiplexing transmission system, level of respective wavelengths are monitored (5,6,8) before controlling quantity of pumping source (13,10) generated from the pumping source which excites optical amplification rare earth addition fiber such that monitored level difference of the respective wavelengths becomes to be minimized. Thus, there is provided a function of dissolving gain difference according to wavelength gain dependability of the gain-flattening optical amplifier.

## Description

### BACKGROUND OF THE INVENTION

The present invention relates to an optical amplification device technology employed in a wavelength division multiplexing transmission system. More to particularly, this invention relates to a gain-flattening optical amplifier which enables gain tilt to be diminished so that it causes output constant control to be executed at the time of implementation of a gain-flattened control. As a result thereof, a system design is facilitated.

### Description of the Prior Art

At the present time, technology of mass communication makes wavelength division multiplexing transmission (WDM transmission) practicable. Namely the wavelength division multiplexing transmission becomes to be employed as the technology of the mass communication. When multi-stage relay of the optical amplifier is performed, low gain tilt is required, because gain difference becomes large problem in respective wavelengths. It causes the gain difference in respective wavelengths to be diminished according to the low gain tilt. The conventional gain equalization method performs gain equalization employing a fixed gain equalization filter. However, there are the problems that gain difference occurs in the respective wavelengths according to wavelength dependability of the gain of the optical amplifier. The wavelength dependability of the gain of the optical amplifier is caused by temperature characteristics, or caused by change of input level according to deficiency of input signal and so forth at the time of wavelength division multiplexing transmission.

As the prior art for improving gain difference of such the optical amplifier, for instance, the Japanese Patent Application Laid-Open No. HEI 9-43647 (the first prior art) is mentioned. The first prior art described in the Japanese Patent Application Laid-Open No. HEI 9-43647 discloses an optical amplifier. The optical amplifier includes an optical fiber which at least a part of the optical fiber is bent. It causes prescribed bending-loss to be generated on the light signal propagating through the optical fiber. The optical amplifier has optical amplification medium more than one for amplifying light signal. The optical amplification medium is connected between an input port and an output port in series. The optical amplification medium amplifies the light signal inputted therein from the input port before outputting from the output port. In such the optical amplifier, the optical fiber which at least a part thereof is bent is included in the path through which the light signal propagates. The optical amplifier includes gain equalizer more than one, which causes the bending-loss to be generated on the light signal propagating through the optical fiber. The gain equalizer is inserted between the input port and the optical amplification medium or between the optical amplification medium and the output port. According to such the optical amplifier, it is capable of performing gain equalization in wide wavelength range. Further, there is the effect that the gain equalizer with low price can be provided, and the optical amplifier with small gain tilt in wide wavelength range can be provided.

Further, as another prior art, for instance, the Japanese Patent Application Laid-Open No. HEI 9-244079 (the second prior art) is mentioned. The second prior art described in the Japanese Patent Application Laid-Open No. HEI 9-244079 discloses a gain equalizer. It is the object of the second prior art to provide a gain equalizer which enables the gain characteristics to the wavelength of the optical amplifier to be equalized. Such the gain equalizer can equalize gain characteristics with respect to the wavelength of the optical amplifier extending wide wavelength band in the optical transmission system using optical amplifier. Such the gain equalizer is to equalize the gain characteristics of the optical amplifier which has gain peak to a plurality of wavelengths. The gain equalizer is connected to the optical amplifier, and has a plurality of periodical optical filters having transmission characteristics with the wavelength settled on the basis of wavelength difference of the gain peaks therebetween as the fundamental period. In such the gain equalizer, the transmission characteristics of the fundamental periodical optical filter takes the wavelength settled on the basis of wavelength difference of the gain peaks therebetween of the optical amplifier to be the fundamental period. Further, another plural periodical optical filters have periods of length of 1 / 2n (n : natural number) of the fundamental period. It causes the transmission characteristics of the plurality of periodical optical filters to be synthesized, thus it is capable of forming contrary characteristics to the gain characteristic of the optical amplifier. Consequently, it is capable of equalizing the gain characteristics of the optical amplifier due to the gain equalizer. For that reason, it is capable of realizing signal transmission band with wide bandwidth. In particular, in the gain equalizer described in claim 5, the periodical optical filter is constituted by Fabry-Perot etalon filter, thus it is capable of realizing required transmission characteristics of the wavelength period. In the gain equalizer described in claim 6, and optical transmission system described in claim 14, a plurality of periodical optical filters are arranged in series. Consequently, it is capable of equalizing the gain characteristics under wide bandwidth with respect to the optical amplifier having a plurality of gain peaks according to simple constitution. Such effect is disclosed therein.

However, the first prior art intends that it causes the gain to be equalized while bending the fiber mechanically, so there is the problem that it is difficult to realize sufficient temperature characteristics and reliability. Further, the second prior art employs a plurality of gain equalizers, so there is the problem that passage-loss increases probably.

### SUMMARY OF THE INVENTION

In view of the foregoing, it is an object of the present invention, in order to overcome the above described problem to provide a gain-flattening optical amplifier which enables gain tilt to be diminished so that it causes output constant control to be executed at the time of implementation of a gain-flattened control, with the result that a system design is facilitated.

According to a first aspect of the invention, in order to achieve the above mentioned object, there is provided a gain-flattening optical amplifier which enables a gain tilt to be diminished on the occasion of wavelength division multiplexing transmission, and which enables output constant control to be executed on the occasion of execution of gain-flattening control, further system design thereof is facilitated, which gain-flattening optical amplifier comprises a means for monitoring a level of respective wavelengths, and a means for canceling gain difference caused by wavelength gain dependability with respect to optical amplification while controlling quantity of pumping light generated from a pumping source which excites an optical amplification rare earth addition fiber such that level difference of the monitor of respective wavelengths is minimized.

According to a second aspect of the present invention, in the first aspect, there is provided a gain-flattening optical amplifier, as an optical detection constitution, further comprises an input port of the gain-flattening optical amplifier for inputting a light input signal, an optical amplification rare earth addition fiber for amplifying to be outputted the light signal inputted therein, a variable optical attenuator which operates with prescribed time constant on the occasion of outputting input light while causing the input light to be attenuated by only prescribed quantity, a pumping source for generating to be outputted pumping light, a pumping source driver which operates with prescribed time constant on the occasion of driving the pumping source, a pumping light multiplexer for multiplexing the pumping light which the pumping source generates to be outputted in order to excite the optical amplification rare earth addition fiber, a plurality of optical branching means for branching optical output level, a plurality of optical bandwidth limiters for selecting wavelength of the branching signal light from respective optical branching means, a plurality of photo-detectors for generating to be outputted optical level information while converting signal light passed through respective optical bandwidth limiters into electric signal, a comparator for generating to be outputted level difference information while comparing optical level information which respective photo-detectors generate to be outputted, a variable optical attenuator controller for controlling the variable optical attenuator on the basis of optical level information which respective photo-detectors generate to be outputted in order to harmonize output level of the optical amplifier, and an output port for outputting light signal with output level controlled by the variable optical attenuator controller, wherein the pumping light multiplexer for multiplexing pumping light in order to excite the optical amplification rare earth addition fiber, and the pumping source are provided in the rear direction of the optical amplification rare earth addition fiber.

According to a third aspect of the present invention, in the first aspect, there is provided a gain-flattening optical amplifier, as an optical detection constitution, further comprises an input port of the gain-flattening optical amplifier for inputting a light input signal, an optical amplification rare earth addition fiber for amplifying to be outputted the light signal inputted therein a variable optical attenuator which operates with prescribed time constant on the occasion of outputting the input light while causing the input light to be attenuated by only prescribed quantity, a pumping source for generating to be outputted pumping light, a pumping source driver which operates with prescribed time constant on the occasion of driving the pumping source, a pumping light multiplexer for multiplexing the pumping light which the pumping source generates to be outputted in order to excite the optical amplification rare earth addition fiber, an optical branching means for branching collectively optical output level, a plurality of optical bandwidth limiters for selecting wavelength of the branching signal light from the optical branching means, a plurality of photo-detectors for generating to be outputted optical level information while converting signal light passed through respective optical bandwidth limiters into electric signal, a comparator for generating to be outputted level difference information while comparing optical level information which respective photo-detectors generate to be outputted, a variable optical attenuator controller for controlling the variable optical attenuator on the basis of optical level information which respective photo-detectors generate to be outputted in order to harmonize output level of the optical amplifier, and an output port for outputting light signal with output level controlled by the variable optical attenuator controller, wherein a group consisting of one optical branching means, two optical bandwidth limiters, and two photo-detectors is provided, further the pumping light multiplexer for multiplexing pumping light in order to excite the optical amplification rare earth addition fiber, and the pumping source are provided in the rear direction of the optical amplification rare earth addition fiber.

According to a fourth aspect of the present invention, in the first aspect, there is provided a gain-flattening optical amplifier, as an optical detection constitution, further comprises an input port of the gain-flattening optical amplifier for inputting a light input signal, an optical amplification rare earth addition fiber for amplifying to be outputted the light signal inputted therein a variable optical attenuator which operates with prescribed time constant on the occasion of outputting the input light while causing the input light to be attenuated by only prescribed quantity, a pumping source for generating to be outputted pumping light, a pumping source driver which operates with prescribed time constant on the occasion of driving the pumping source, a pumping light multiplexer for multiplexing the pumping light which the pumping source generates to be outputted in order to excite the optical amplification rare earth addition fiber, two optical branching means arranged in series in the direction of transmission path, for branching optical output level, a plurality of optical bandwidth limiters for selecting wavelength of the branching signal light from the respective optical branching means, a plurality of photo-detectors for generating to be outputted optical level information while converting the signal light passed through respective optical bandwidth limiters into electric signal, a comparator for generating to be outputted level difference information while comparing optical level information which respective photo-detectors generate to be outputted, a variable optical attenuator controller for controlling the variable optical attenuator on the basis of optical level information which respective photo-detectors generate to be outputted in order to harmonize output level of the optical amplifier, and an output port for outputting light signal with output level controlled by the variable optical attenuator controller, wherein there is provided two groups, and each one of the two groups consists of one optical branching means, one optical bandwidth limiter, and one photo-detector, further the pumping light multiplexer for multiplexing pumping light in order to excite the optical amplification rare earth addition fiber, and the pumping source are provided in the rear direction of the optical amplification rare earth addition fiber.

According to a fifth aspect of the present invention, in the first aspect, there is provided a gain-flattening optical amplifier, as an optical detection constitution, further comprises an input port of the gain-flattening optical amplifier for inputting a light input signal, an optical amplification rare earth addition fiber for amplifying to be outputted the light signal inputted therein a variable optical attenuator which operates with prescribed time constant on the occasion of outputting input light while causing the input light to be attenuated by only prescribed quantity, a pumping source for generating to be outputted pumping light, a pumping source driver which operates with prescribed time constant on the occasion of driving the pumping source, a pumping light multiplexer for multiplexing the pumping light which the pumping source generates to be outputted in order to excite the optical amplification rare earth addition fiber, a plurality of optical branching means arranged in series in the direction of transmission path for executing optical branching in order to monitor different wavelength, a plurality of optical bandwidth limiters for selecting wavelength of the branching signal light from the respective optical branching means, a plurality of photo-detectors for generating to be outputted optical level information while converting signal light passed through respective optical bandwidth limiters into electric signal, a comparator for generating to be outputted level difference information while comparing optical level information which respective the photo-detectors generate to be outputted, a variable optical attenuator controller for controlling the variable optical attenuator on the basis of optical level information which respective photo-detectors generate to be outputted in order to harmonize output level of optical amplifier, and an output port for outputting light signal with output level controlled by the variable optical attenuator controller, wherein these a plurality of optical branching means, the optical bandwidth limiters, and a plurality of the photo-detectors are constituted as a plurality of respective groups which are provided in series in the direction of transmission path respectively, furthermore, the pumping light multiplexer for multiplexing pumping light in order to excite the optical amplification rare earth addition fiber, and the pumping source are provided in the rear direction of the optical amplification rare earth addition fiber.

According to a sixth aspect of the present invention, in the first aspect, there is provided a gain-flattening optical amplifier, as an optical detection constitution, further comprises an input port of the gain-flattening optical amplifier for inputting a light input signal an optical amplification rare earth addition fiber for amplifying to be outputted the light signal inputted therein, a variable optical attenuator which operates with prescribed time constant on the occasion of outputting the input light while causing the input light to be attenuated by only prescribed quantity, a pumping source for generating to be outputted pumping light, a pumping source driver which operates with prescribed time constant on the occasion of driving the pumping source, a pumping light multiplexer for multiplexing the pumping light which the pumping source generates to be outputted in order to excite the optical amplification rare earth addition fiber, a plurality of optical branching means for branching optical output level, a plurality of optical bandwidth limiters for selecting wavelength of the branching signal light from respective the optical branching means, a plurality of photo-detectors for generating to be outputted optical level information while converting signal light passed through respective the optical bandwidth limiters into electric signal, a comparator for generating to be outputted level difference information while comparing optical level information which respective photo-detectors generate to be outputted, a variable optical attenuator controller for controlling the variable optical attenuator on the basis of optical level information which respective the photo-detectors generate to be outputted in order to harmonize output level of the optical amplifier, and an output port for outputting light signal with output level controlled by the variable optical attenuator controller, wherein there are provided a plurality of groups and the group consists of the optical branching means, the optical bandwidth limiter, and the photo-detector, arranged in parallel in the direction of the transmission path, further the pumping light multiplexer for multiplexing pumping light in order to excite the optical amplification rare earth addition fiber, and the pumping source are provided in the rear direction of the optical amplification rare earth addition fiber.

According to a seventh aspect of the present invention, in the first aspect, there is provided a gain-flattening optical amplifier, as an optical detection constitution, further comprises an input port of the gain-flattening optical amplifier for inputting a light input signal, an optical amplification rare earth addition fiber for amplifying to be outputted the light signal inputted therein, a variable optical attenuator which operates with prescribed time constant on the occasion of outputting input light while causing the input light to be attenuated by only prescribed quantity, a pumping source for generating to be outputted pumping light, a pumping source driver which operates with prescribed time constant on the occasion of driving the pumping source, a pumping light multiplexer for multiplexing the pumping light which the pumping source generates to be outputted in order to excite the optical amplification rare earth addition fiber, a plurality of optical branching means for branching optical output level, a plurality of optical bandwidth limiters for selecting wavelength of the branching signal light from respective the optical branching means, a plurality of photo-detectors for generating to be outputted optical level information while converting signal light passed through respective the optical bandwidth limiters into electric signal, a comparator for generating to be outputted level difference information while comparing optical level information which respective photo-detectors generate to be outputted, a variable optical attenuator controller for controlling the variable optical attenuator on the basis of optical level information which respective photo-detectors generate to be outputted in order to harmonize output level of the optical amplifier, and an output port for outputting light signal with output level controlled by the variable optical attenuator controller, wherein there are provided a plurality of groups, and each group thereof consists of the optical branching means, the optical bandwidth limiter, and the photo-detector, in series in the direction of the transmission path, the pumping light multiplexer for multiplexing pumping light in order to excite the optical amplification rare earth addition fiber, and the pumping source are provided in the rear direction of the optical amplification rare earth addition fiber.

According to an eighth aspect of the present invention, in the first aspect, there is provided a gain-flattening optical amplifier, as an optical constitution, further comprises an input port of the gain-flattening optical amplifier for inputting a light input signal, an optical amplification rare earth addition fiber for amplifying to be outputted the light signal inputted therein, a variable optical attenuator which operates with prescribed time constant on the occasion of outputting input light while causing the input light to be attenuated by only prescribed quantity, a pumping source for generating to be outputted pumping light, a pumping source driver which operates with prescribed time constant on the occasion of driving the pumping source, a pumping light multiplexer for multiplexing the pumping light which the pumping source generates to be outputted in order to excite the optical amplification rare earth addition fiber, the optical branching means for branching collectively optical output level, a plurality of optical bandwidth limiters for selecting wavelength of the branching signal light from the optical branching means, a plurality of photo-detectors for generating to be outputted optical level information while converting signal light passed through respective optical bandwidth limiters into electric signal, a comparator for generating to be outputted level difference information while comparing optical level information which respective photo-detectors generate to be outputted, a variable optical attenuator controller for controlling the variable optical attenuator on the basis of optical level information which respective photo-detectors generate to be outputted in order to harmonize output level of the optical amplifier, and an output port for outputting light signal with output level controlled by the variable optical attenuator controller, wherein a group consists of optical bandwidth limiter and photo-detector, and a plurality of groups are connected to the one optical branching means respectively, further, the pumping light multiplexer for multiplexing pumping light in order to excite the optical amplification rare earth addition fiber, and the pumping source are provided in the rear direction of the optical amplification rare earth addition fiber.

According to a ninth aspect of the present invention, in the first aspect, there is provided a gain-flattening optical amplifier, as an optical constitution, further comprises an input port of the gain-flattening optical amplifier for inputting a light input signal, an optical amplification rare earth addition fiber for amplifying to be outputted the light signal inputted therein, a variable optical attenuator which operates with prescribed time constant on the occasion of outputting input light while causing the input light to be attenuated by only prescribed quantity, a pumping source for generating to be outputted pumping light, a pumping source driver which operates with prescribed time constant on the occasion of driving the pumping source, a pumping light multiplexer for multiplexing the pumping light which the pumping source generates to be outputted in order to excite the optical amplification rare earth addition fiber, a plurality of optical branching means for branching collectively optical output level, a plurality of optical bandwidth limiters for selecting wavelength of the branching signal light from the plurality of optical branching means, a plurality of photo-detectors for generating to be outputted optical level information while converting signal light passed through respective the optical bandwidth limiters into electric signal, a comparator for generating to be outputted level difference information while comparing optical level information which respective photo-detectors generate to be outputted, a variable optical attenuator controller for controlling the variable optical attenuator on the basis of optical level information which respective photo-detectors generate to be outputted in order to harmonize output level of the optical amplifier, and an output port for outputting light signal with output level controlled by the variable optical attenuator controller, wherein a plurality of groups are provided, and each one of the plurality groups consists of the one optical branching means, the plural optical bandwidth limiters, and the plural photo-detectors, in series, in the direction of the transmission path, further, the pumping light multiplexer for multiplexing pumping light in order to excite the optical amplification rare earth addition fiber, and the pumping source are provided in the rear direction of the optical amplification rare earth addition fiber.

According to a tenth aspect of the present invention, in the first aspect, there is provided a gain-flattening optical amplifier, as an optical detection constitution, further comprises an input port of the gain-flattening optical amplifier for inputting a light input signal, an optical amplification rare earth addition fiber for amplifying to be outputted the light signal inputted therein, a variable optical attenuator which operates with prescribed time constant on the occasion of outputting input light while causing the input light to be attenuated by only prescribed quantity, a pumping source for generating to be outputted pumping light, a pumping source driver which operates with prescribed time constant on the occasion of driving the pumping source, a pumping light multiplexer for multiplexing the pumping light which the pumping source generates to be outputted in order to excite the optical amplification rare earth addition fiber, a plurality of optical branching means for branching optical output level, a plurality of optical bandwidth limiters for selecting wavelength of the branching signal light from respective optical branching means, a plurality of photo-detectors for generating to be outputted optical level information while converting signal light passed through respective optical bandwidth limiters into electric signal, a comparator for generating to be outputted level difference information while comparing optical level information which respective photo-detectors generate to be outputted, a variable optical attenuator controller for controlling the variable optical attenuator on the basis of optical level information which respective photo-detectors generate to be outputted in order to harmonize output level of the optical amplifier, and an output port for outputting light signal with output level controlled by the variable optical attenuator controller, wherein the pumping light multiplexer for multiplexing pumping light in order to excite the optical amplification rare earth addition fiber, and the pumping source are provided in the front direction of the optical amplification rare earth addition fiber.

According to an eleventh aspect of the present invention, in the first aspect, there is provided a gain-flattening optical amplifier, as an optical detection constitution, further comprises an input port of the gain-flattening optical amplifier for inputting a light input signal, an optical amplification rare earth addition fiber for amplifying to be outputted the light signal inputted therein a variable optical attenuator which operates with prescribed time constant on the occasion of outputting the input light while causing the input light to be attenuated by only prescribed quantity, a pumping source for generating to be outputted pumping light, a pumping source driver which operates with prescribed time constant on the occasion of driving the pumping source, a pumping light multiplexer for multiplexing the pumping light which the pumping source generates to be outputted in order to excite the optical amplification rare earth addition fiber, an optical branching means for branching collectively optical output level, a plurality of optical bandwidth limiters for selecting wavelength of the branching signal light from the optical branching means, a plurality of photo-detectors for generating to be outputted optical level information while converting signal light passed through respective optical bandwidth limiters into electric signal, a comparator for generating to be outputted level difference information while comparing optical level information which respective photo-detectors generate to be outputted, a variable optical attenuator controller for controlling the variable optical attenuator on the basis of optical level information which respective photo-detectors generate to be outputted in order to harmonize output level of the optical amplifier, and an output port for outputting light signal with output level controlled by the variable optical attenuator controller, wherein a group consisting of one optical branching means, two optical bandwidth limiters, and two photo-detectors is provided, further the pumping light multiplexer for multiplexing pumping light in order to excite the optical amplification rare earth addition fiber, and the pumping source are provided in the front direction of the optical amplification rare earth addition fiber.

According to a twelfth aspect of the present invention, in the first aspect, there is provided a gain-flattening optical amplifier, as an optical detection constitution, further comprises an input port of the gain-flattening optical amplifier for inputting a light input signal, an optical amplification rare earth addition fiber for amplifying to be outputted the light signal inputted therein a variable optical attenuator which operates with prescribed time constant on the occasion of outputting the input light while causing the input light to be attenuated by only prescribed quantity, a pumping source for generating to be outputted pumping light, a pumping source driver which operates with prescribed time constant on the occasion of driving the pumping source, a pumping light multiplexer for multiplexing the pumping light which the pumping source generates to be outputted in order to excite the optical amplification rare earth addition fiber, two optical branching means arranged in series in the direction of transmission path, for branching optical output level, a plurality of optical bandwidth limiters for selecting wavelength of the branching signal light from the respective optical branching means, a plurality of photo-detectors for generating to be outputted optical level information while converting the signal light passed through respective optical bandwidth limiters into electric signal, a comparator for generating to be outputted level difference information while comparing optical level information which respective photo-detectors generate to be outputted, a variable optical attenuator controller for controlling the variable optical attenuator on the basis of optical level information which respective photo-detectors generate to be outputted in order to harmonize output level of the optical amplifier, and an output port for outputting light signal with output level controlled by the variable optical attenuator controller, wherein there is provided two groups in series in the direction of transmission path, and each one of the two groups consists of one optical branching means, one optical bandwidth limiter, and one photo-detector, further the pumping light multiplexer for multiplexing pumping light in order to excite the optical amplification rare earth addition fiber, and the pumping source are provided in the front direction of the optical amplification rare earth addition fiber.

According to a thirteenth aspect of the present invention, in the first aspect, there is provided a gain-flattening optical amplifier, as an optical detection constitution, further comprises an input port of the gain-flattening optical amplifier for inputting a light input signal, an optical amplification rare earth addition fiber for amplifying to be outputted the light signal inputted therein a variable optical attenuator which operates with prescribed time constant on the occasion of outputting input light while causing the input light to be attenuated by only prescribed quantity, a pumping source for generating to be outputted pumping light, a pumping source driver which operates with prescribed time constant on the occasion of driving the pumping source, a pumping light multiplexer for multiplexing the pumping light which the pumping source generates to be outputted in order to excite the optical amplification rare earth addition fiber, a plurality of optical branching means arranged in series in the direction of transmission path for executing optical branching in order to monitor different wavelength, a plurality of optical bandwidth limiters for selecting wavelength of the branching signal light from the respective optical branching means, a plurality of photo-detectors for generating to be outputted optical level information while converting signal light passed through respective optical bandwidth limiters into electric signal, a comparator for generating to be outputted level difference information while comparing optical level information which respective the photo-detectors generate to be outputted, a variable optical attenuator controller for controlling the variable optical attenuator on the basis of optical level information which respective photo-detectors generate to be outputted in order to harmonize output level of optical amplifier, and an output port for outputting light signal with output level controlled by the variable optical attenuator controller, wherein these a plurality of optical branching means, the optical bandwidth limiters, and a plurality of the photo-detectors are constituted as a plurality of respective groups which are provided in series in the direction of transmission path respectively, furthermore, the pumping light multiplexer for multiplexing pumping light in order to excite the optical amplification rare earth addition fiber, and the pumping source are provided in the front direction of the optical amplification rare earth addition fiber.

According to a fourteenth aspect of the present invention, in the first aspect, there is provided a gain-flattening optical amplifier, as an optical detection constitution, further comprises an input port of the gain-flattening optical amplifier for inputting a light input signal an optical amplification rare earth addition fiber for amplifying to be outputted the light signal inputted therein, a variable optical attenuator which operates with prescribed time constant on the occasion of outputting the input light while causing the input light to be attenuated by only prescribed quantity, a pumping source for generating to be outputted pumping light, a pumping source driver which operates with prescribed time constant on the occasion of driving the pumping source, a pumping light multiplexer for multiplexing the pumping light which the pumping source generates to be outputted in order to excite the optical amplification rare earth addition fiber, a plurality of optical branching means for branching optical output level, a plurality of optical bandwidth limiters for selecting wavelength of the branching signal light from respective the optical branching means, a plurality of photo-detectors for generating to be outputted optical level information while converting signal light passed through respective the optical bandwidth limiters into electric signal, a comparator for generating to be outputted level difference information while comparing optical level information which respective photo-detectors generate to be outputted, a variable optical attenuator controller for controlling the variable optical attenuator on the basis of optical level information which respective the photo-detectors generate to be outputted in order to harmonize output level of the optical amplifier, and an output port for outputting light signal with output level controlled by the variable optical attenuator controller, wherein there are provided a plurality of groups and the group consists of the optical branching means, the optical bandwidth limiter, and the photo-detector, arranged in parallel in the direction of the transmission path, further the pumping light multiplexer for multiplexing pumping light in order to excite the optical amplification rare earth addition fiber, and the pumping source are provided in the front direction of the optical amplification rare earth addition fiber.

According to a fifteenth aspect of the present invention, in the first aspect, there is provided a gain-flattening optical amplifier, as an optical detection constitution, further comprises an input port of the gain-flattening optical amplifier for inputting a light input signal, an optical amplification rare earth addition fiber for amplifying to be outputted the light signal inputted therein, a variable optical attenuator which operates with prescribed time constant on the occasion of outputting input light while causing the input light to be attenuated by only prescribed quantity, a pumping source for generating to be outputted pumping light, a pumping source driver which operates with prescribed time constant on the occasion of driving the pumping source, a pumping light multiplexer for multiplexing the pumping light which the pumping source generates to be outputted in order to excite the optical amplification rare earth addition fiber, a plurality of optical branching means for branching optical output level, a plurality of optical bandwidth limiters for selecting wavelength of the branching signal light from respective the optical branching means, a plurality of photo-detectors for generating to be outputted optical level information while converting signal light passed through respective the optical bandwidth limiters into electric signal, a comparator for generating to be outputted level difference information while comparing optical level information which respective photo-detectors generate to be outputted, a variable optical attenuator controller for controlling the variable optical attenuator on the basis of optical level information which respective photo-detectors generate to be outputted in order to harmonize output level of the optical amplifier, and an output port for outputting light signal with output level controlled by the variable optical attenuator controller, wherein there are provided a plurality of groups, and each group thereof consists of the optical branching means, the optical bandwidth limiter, and the photo-detector, in series in the direction of the transmission path, the pumping light multiplexer for multiplexing pumping light in order to excite the optical amplification rare earth addition fiber, and the pumping source are provided in the front direction of the optical amplification rare earth addition fiber.

According to an sixteenth aspect of the present invention, in the first aspect, there is provided a gain-flattening optical amplifier, as an optical constitution, further comprises an input port of the gain-flattening optical amplifier for inputting a light input signal, an optical amplification rare earth addition fiber for amplifying to be outputted the light signal inputted therein, a variable optical attenuator which operates with prescribed time constant on the occasion of outputting input light while causing the input light to be attenuated by only prescribed quantity, a pumping source for generating to be outputted pumping light, a pumping source driver which operates with prescribed time constant on the occasion of driving the pumping source, a pumping light multiplexer for multiplexing the pumping light which the pumping source generates to be outputted in order to excite the optical amplification rare earth addition fiber, the optical branching means for branching collectively optical output level, a plurality of optical bandwidth limiters for selecting wavelength of the branching signal light from the optical branching means, a plurality of photo-detectors for generating to be outputted optical level information while converting signal light passed through respective optical bandwidth limiters into electric signal, a comparator for generating to be outputted level difference information while comparing optical level information which respective photo-detectors generate to be outputted, a variable optical attenuator controller for controlling the variable optical attenuator on the basis of optical level information which respective photo-detectors generate to be outputted in order to harmonize output level of the optical amplifier, and an output port for outputting light signal with output level controlled by the variable optical attenuator controller, wherein a group consists of optical bandwidth limiter and photo-detector, and a plurality of groups are connected to the one optical branching means respectively, further, the pumping light multiplexer for multiplexing pumping light in order to excite the optical amplification rare earth addition fiber, and the pumping source are provided in the front direction of the optical amplification rare earth addition fiber.

According to a seventeenth aspect of the present invention, in the first aspect, there is provided a gain-flattening optical amplifier, as an optical constitution, further comprises an input port of the gain-flattening optical amplifier for inputting a light input signal, an optical amplification rare earth addition fiber for amplifying to be outputted the light signal inputted therein, a variable optical attenuator which operates with prescribed time constant on the occasion of outputting input light while causing the input light to be attenuated by only prescribed quantity, a pumping source for generating to be outputted pumping light, a pumping source driver which operates with prescribed time constant on the occasion of driving the pumping source, a pumping light multiplexer for multiplexing the pumping light which the pumping source generates to be outputted in order to excite the optical amplification rare earth addition fiber, a plurality of optical branching means for branching collectively optical output level, a plurality of optical bandwidth limiters for selecting wavelength of the branching signal light from the plurality of optical branching means, a plurality of photo-detectors for generating to be outputted optical level information while converting signal light passed through respective the optical bandwidth limiters into electric signal, a comparator for generating to be outputted level difference information while comparing optical level information which respective photo-detectors generate to be outputted, a variable optical attenuator controller for controlling the variable optical attenuator on the basis of optical level information which respective photo-detectors generate to be outputted in order to harmonize output level of the optical amplifier, and an output port for outputting light signal with output level controlled by the variable optical attenuator controller, wherein a plurality of groups are provided, and each one of the plurality groups consists of the one optical branching means, the plural optical bandwidth limiters, and the plural photo-detectors, in series in the direction of the transmission path, further, the pumping light multiplexer for multiplexing pumping light in order to excite the optical amplification rare earth addition fiber, and the pumping source are provided in the front direction of the optical amplification rare earth addition fiber.

According to an eighteenth aspect of the present invention, in the first aspect, there is provided a gain-flattening optical amplifier, as an optical detection constitution, further comprises an input port of the gain-flattening optical amplifier for inputting a light input signal, an optical amplification rare earth addition fiber for amplifying to be outputted the light signal inputted therein, a variable optical attenuator which operates with prescribed time constant on the occasion of outputting input light while causing the input light to be attenuated by only prescribed quantity, a pumping source for generating to be outputted pumping light, a pumping source driver which operates with prescribed time constant on the occasion of driving the pumping source, a pumping light multiplexer for multiplexing the pumping light which the pumping source generates to be outputted in order to excite the optical amplification rare earth addition fiber, a plurality of optical branching means for branching optical output level, a plurality of optical bandwidth limiters for selecting wavelength of the branching signal light from respective optical branching means, a plurality of photo-detectors for generating to be outputted optical level information while converting signal light passed through respective optical bandwidth limiters into electric signal, a comparator for generating to be outputted level difference information while comparing optical level information which respective photo-detectors generate to be outputted, a variable optical attenuator controller for controlling the variable optical attenuator on the basis of optical level information which respective photo-detectors generate to be outputted in order to harmonize output level of the optical amplifier, and an output port for outputting light signal with output level controlled by the variable optical attenuator controller, wherein the pumping light multiplexer for multiplexing pumping light for exciting the optical amplification rare earth addition fiber, the pumping source, and the optical amplification rare earth addition fiber are provided bi-directionally.

According to a nineteenth aspect of the present invention, in the first aspect, there is provided a gain-flattening optical amplifier, as an optical detection constitution, further comprises an input port of the gain-flattening optical amplifier for inputting a light input signal, an optical amplification rare earth addition fiber for amplifying to be outputted the light signal inputted therein a variable optical attenuator which operates with prescribed time constant on the occasion of outputting the input light while causing the input light to be attenuated by only prescribed quantity, a pumping source for generating to be outputted pumping light, a pumping source driver which operates with prescribed time constant on the occasion of driving the pumping source, a pumping light multiplexer for multiplexing the pumping light which the pumping source generates to be outputted in order to excite the optical amplification rare earth addition fiber, an optical branching means for branching collectively optical output level, a plurality of optical bandwidth limiters for selecting wavelength of the branching signal light from the optical branching means, a plurality of photo-detectors for generating to be outputted optical level information while converting signal light passed through respective optical bandwidth limiters into electric signal, a comparator for generating to be outputted level difference information while comparing optical level information which respective photo-detectors generate to be outputted, a variable optical attenuator controller for controlling the variable optical attenuator on the basis of optical level information which respective photo-detectors generate to be outputted in order to harmonize output level of the optical amplifier, and an output port for outputting light signal with output level controlled by the variable optical attenuator controller, wherein a group consisting of one optical branching means, two optical bandwidth limiters, and two photo-detectors is provided, further the pumping light multiplexer for multiplexing pumping light for exciting the optical amplification rare earth addition fiber, the pumping source, and the optical amplification rare earth addition fiber are provided bi-directionally.

According to a twentieth aspect of the present invention, in the first aspect, there is provided a gain-flattening optical amplifier, as an optical detection constitution, further comprises an input port of the gain-flattening optical amplifier for inputting a light input signal, an optical amplification rare earth addition fiber for amplifying to be outputted the light signal inputted therein a variable optical attenuator which operates with prescribed time constant on the occasion of outputting the input light while causing the input light to be attenuated by only prescribed quantity, a pumping source for generating to be outputted pumping light, a pumping source driver which operates with prescribed time constant on the occasion of driving the pumping source, a pumping light multiplexer for multiplexing the pumping light which the pumping source generates to be outputted in order to excite the optical amplification rare earth addition fiber, two optical branching means arranged in series in the direction of transmission path, for branching optical output level, a plurality of optical bandwidth limiters for selecting wavelength of the branching signal light from the respective optical branching means, a plurality of photo-detectors for generating to be outputted optical level information while converting the signal light passed through respective optical bandwidth limiters into electric signal, a comparator for generating to be outputted level difference information while comparing optical level information which respective photo-detectors generate to be outputted, a variable optical attenuator controller for controlling the variable optical attenuator on the basis of optical level information which respective photo-detectors generate to be outputted in order to harmonize output level of the optical amplifier, and an output port for outputting light signal with output level controlled by the variable optical attenuator controller, wherein there is provided two groups, and each one of the two groups consists of one optical branching means, one optical bandwidth limiter, and one photo-detector, further, the pumping light multiplexer for multiplexing pumping light for exciting the optical amplification rare earth addition fiber, the pumping source, and the optical amplification rare earth addition fiber are provided bi-directionally.

According to a twenty-first aspect of the present invention, in the first aspect, there is provided a gain-flattening optical amplifier, as an optical detection constitution, further comprises an input port of the gain-flattening optical amplifier for inputting a light input signal, an optical amplification rare earth addition fiber for amplifying to be outputted the light signal inputted therein a variable optical attenuator which operates with prescribed time constant on the occasion of outputting input light while causing the input light to be attenuated by only prescribed quantity, a pumping source for generating to be outputted pumping light, a pumping source driver which operates with prescribed time constant on the occasion of driving the pumping source, a pumping light multiplexer for multiplexing the pumping light which the pumping source generates to be outputted in order to excite the optical amplification rare earth addition fiber, a plurality of optical branching means arranged in series in the direction of transmission path for executing optical branching in order to monitor different wavelength, a plurality of optical bandwidth limiters for selecting wavelength of the branching signal light from the respective optical branching means, a plurality of photo-detectors for generating to be outputted optical level information while converting signal light passed through respective optical bandwidth limiters into electric signal, a comparator for generating to be outputted level difference information while comparing optical level information which respective the photo-detectors generate to be outputted, a variable optical attenuator controller for controlling the variable optical attenuator on the basis of optical level information which respective photo-detectors generate to be outputted in order to harmonize output level of optical amplifier, and an output port for outputting light signal with output level controlled by the variable optical attenuator controller, wherein these a plurality of optical branching means, the optical bandwidth limiters, and a plurality of the photo-detectors are constituted as a plurality of respective groups which are provided in series in the direction of transmission path respectively, furthermore, the pumping light multiplexer for multiplexing pumping light for exciting the optical amplification rare earth addition fiber, the pumping source, and the optical amplification rare earth addition fiber are provided bi-directionally.

According to a twenty-second aspect of the present invention, in the first aspect, there is provided a gain-flattening optical amplifier, as an optical detection constitution, further comprises an input port of the gain-flattening optical amplifier for inputting a light input signal an optical amplification rare earth addition fiber for amplifying to be outputted the light signal inputted therein, a variable optical attenuator which operates with prescribed time constant on the occasion of outputting the input light while causing the input light to be attenuated by only prescribed quantity, a pumping source for generating to be outputted pumping light, a pumping source driver which operates with prescribed time constant on the occasion of driving the pumping source, a pumping light multiplexer for multiplexing the pumping light which the pumping source generates to be outputted in order to excite the optical amplification rare earth addition fiber, a plurality of optical branching means for branching optical output level, a plurality of optical bandwidth limiters for selecting wavelength of the branching signal light from respective the optical branching means, a plurality of photo-detectors for generating to be outputted optical level information while converting signal light passed through respective the optical bandwidth limiters into electric signal, a comparator for generating to be outputted level difference information while comparing optical level information which respective photo-detectors generate to be outputted, a variable optical attenuator controller for controlling the variable optical attenuator on the basis of optical level information which respective the photo-detectors generate to be outputted in order to harmonize output level of the optical amplifier, and an output port for outputting light signal with output level controlled by the variable optical attenuator controller, wherein there are provided a plurality of groups and a group consists of the optical branching means, the optical bandwidth limiter, and the photo-detector, arranged in parallel in the direction of the transmission path, further, the pumping light multiplexer for multiplexing pumping light for exciting the optical amplification rare earth addition fiber, the pumping source, and the optical amplification rare earth addition fiber are provided bi-directionally.

According to a twenty-third aspect of the present invention, in the first aspect, there is provided a gain-flattening optical amplifier, as an optical detection constitution, further comprises an input port of the gain-flattening optical amplifier for inputting a light input signal, an optical amplification rare earth addition fiber for amplifying to be outputted the light signal inputted therein, a variable optical attenuator which operates with prescribed time constant on the occasion of outputting input light while causing the input light to be attenuated by only prescribed quantity, a pumping source for generating to be outputted pumping light, a pumping source driver which operates with prescribed time constant on the occasion of driving the pumping source, a pumping light multiplexer for multiplexing the pumping light which the pumping source generates to be outputted in order to excite the optical amplification rare earth addition fiber, a plurality of optical branching means for branching optical output level, a plurality of optical bandwidth limiters for selecting wavelength of the branching signal light from respective the optical branching means, a plurality of photo-detectors for generating to be outputted optical level information while converting signal light passed through respective the optical bandwidth limiters into electric signal, a comparator for generating to be outputted level difference information while comparing optical level information which respective photo-detectors generate to be outputted, a variable optical attenuator controller for controlling the variable optical attenuator on the basis of optical level information which respective photo-detectors generate to be outputted in order to harmonize output level of the optical amplifier, and an output port for outputting light signal with output level controlled by the variable optical attenuator controller, wherein there are provided a plurality of groups, and each group thereof consists of the optical branching means, the optical bandwidth limiter, and the photo-detector, in series in the direction of the transmission path, further, the pumping light multiplexer for multiplexing pumping light for exciting the optical amplification rare earth addition fiber, the pumping source, and the optical amplification rare earth addition fiber are provided bi-directionally.

According to a twenty-fourth aspect of the present invention, in the first aspect, there is provided a gain-flattening optical amplifier, as an optical constitution, further comprises an input port of the gain-flattening optical amplifier for inputting a light input signal, an optical amplification rare earth addition fiber for amplifying to be outputted the light signal inputted therein, a variable optical attenuator which operates with prescribed time constant on the occasion of outputting input light while causing the input light to be attenuated by only prescribed quantity, a pumping source for generating to be outputted pumping light, a pumping source driver which operates with prescribed time constant on the occasion of driving the pumping source, a pumping light multiplexer for multiplexing the pumping light which the pumping source generates to be outputted in order to excite the optical amplification rare earth addition fiber, the optical branching means for branching collectively optical output level, a plurality of optical bandwidth limiters for selecting wavelength of the branching signal light from the optical branching means, a plurality of photo-detectors for generating to be outputted optical level information while converting signal light passed through respective optical bandwidth limiters into electric signal, a comparator for generating to be outputted level difference information while comparing optical level information which respective photo-detectors generate to be outputted, a variable optical attenuator controller for controlling the variable optical attenuator on the basis of optical level information which respective photo-detectors generate to be outputted in order to harmonize output level of the optical amplifier, and an output port for outputting light signal with output level controlled by the variable optical attenuator controller, wherein a group consists of optical bandwidth limiter and photo-detector, and a plurality of groups are connected to the one optical branching means respectively, further, the pumping light multiplexer for multiplexing pumping light for exciting the optical amplification rare earth addition fiber, the pumping source, and the optical amplification rare earth addition fiber are provided bi-directionally.

According to a twenty-fifth aspect of the present invention, in the first aspect, there is provided a gain-flattening optical amplifier, as an optical constitution, further comprises an input port of the gain-flattening optical amplifier for inputting a light input signal, an optical amplification rare earth addition fiber for amplifying to be outputted the light signal inputted therein, a variable optical attenuator which operates with prescribed time constant on the occasion of outputting input light while causing the input light to be attenuated by only prescribed quantity, a pumping source for generating to be outputted pumping light, a pumping source driver which operates with prescribed time constant on the occasion of driving the pumping source, a pumping light multiplexer for multiplexing the pumping light which the pumping source generates to be outputted in order to excite the optical amplification rare earth addition fiber, a plurality of optical branching means for branching collectively optical output level, a plurality of optical bandwidth limiters for selecting wavelength of the branching signal light from the plurality of optical branching means, a plurality of photo-detectors for generating to be outputted optical level information while converting signal light passed through respective the optical bandwidth limiters into electric signal, a comparator for generating to be outputted level difference information while comparing optical level information which respective photo-detectors generate to be outputted, a variable optical attenuator controller for controlling the variable optical attenuator on the basis of optical level information which respective photo-detectors generate to be outputted in order to harmonize output level of the optical amplifier, and an output port for outputting light signal with output level controlled by the variable optical attenuator controller, wherein a plurality of groups are provided, and each one of the plurality groups consists of the one optical branching means, the plural optical bandwidth limiters, and the plural photo-detectors, further, the pumping light multiplexer for multiplexing pumping light for exciting the optical amplification rare earth addition fiber, the pumping source, and the optical amplification rare earth addition fiber are provided bi-directionally.

### BRIEF DESCRIPTION OF THE DRAWINGS

Fig. 1 is a circuit block diagram for explaining a gain-flattening optical amplifier according to a first embodiment of the present invention;
Fig. 2 is a circuit block diagram for explaining a gain-flattening optical amplifier according to a second embodiment of the present invention;
Fig. 3 is a circuit block diagram for explaining a gain-flattening optical amplifier according to a third embodiment of the present invention;
Fig. 4 is a circuit block diagram for explaining a gain-flattening optical amplifier according to a fourth embodiment of the present invention;
Fig. 5 is a circuit block diagram for explaining a gain-flattening optical amplifier according to a fifth embodiment of the present invention;
Fig. 6 is a circuit block diagram for explaining a gain-flattening optical amplifier according to a sixth embodiment of the present invention;
Fig. 7 is a circuit block diagram for explaining a gain-flattening optical amplifier according to a seventh embodiment of the present invention;
Fig. 8 is a circuit block diagram for explaining a gain-flattening optical amplifier according to an eighth embodiment of the present invention;
Fig. 9 is a graph showing characteristic example of rare earth addition fiber with respect to input level;
Fig. 10A and Fig. 10B are graphs showing characteristic example of optical bandwidth limiter;
Fig. 11A and Fig. 11B are graphs showing characteristic example of optical bandwidth limiter;
Fig. 12A, Fig. 12B, and Fig. 12C are graphs showing processing example of gain flattening in variable optical attenuator;
Fig. 13 is a circuit block diagram for explaining a gain-flattening optical amplifier according to a ninth embodiment of the present invention;
Fig. 14 is a circuit block diagram for explaining a gain-flattening optical amplifier according to a tenth embodiment of the present invention;
Fig. 15 is a circuit block diagram for explaining a gain-flattening optical amplifier according to an eleventh embodiment of the present invention;
Fig. 16 is a circuit block diagram for explaining a gain-flattening optical amplifier according to a twelfth embodiment of the present invention;
Fig. 17 is a circuit block diagram for explaining a gain-flattening optical amplifier according to a thirteenth embodiment of the present invention;
Fig. 18 is a circuit block diagram for explaining a gain-flattening optical amplifier according to a fourteenth embodiment of the present invention;
Fig. 19 is a circuit block diagram for explaining a gain-flattening optical amplifier according to a fifteenth embodiment of the present invention; and
Fig. 20 is a circuit block diagram for explaining a gain-flattening optical amplifier according to a sixteenth embodiment of the present invention.

### DETAILED DESCRIPTION OF THE PREFERRED EMBODIMENTS

An important characteristic of respective embodiments is shown. A gain-flattening optical amplifier is employed in a wavelength division multiplexing system. The gain-flattening optical amplifier monitors level of respective wavelengths. The gain-flattening optical amplifier controls pumping light quantity generated from the pumping source which causes optical amplification rare-earth addition fiber to be excited such that level difference of the monitor of respective wavelengths is minimized. Further, there is provided function of dissolving gain difference caused by wavelength gain dependability of the gain-flattening optical amplifier. Thus, it is capable of diminishing gain tilt on the occasion of the wavelength division multiplexing transmission (WDM transmission), further it is capable of executing output constant control at the time of execution of the gain-flattened control, so that the system design is facilitated. Preferred embodiments of the present invention will now be described in detail in accordance with the accompanying drawings.

### (FIRST EMBODIMENT)

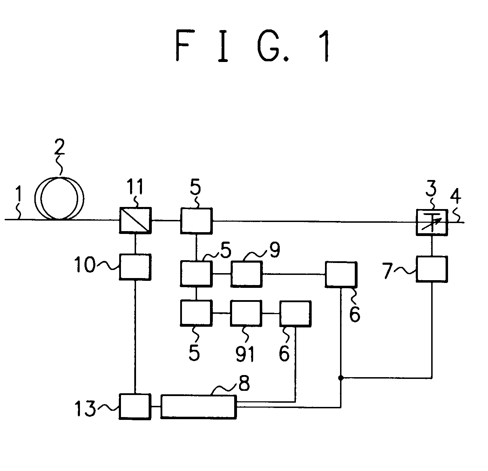

Fig. 1 is a circuit block diagram for explaining a gain-flattening optical amplifier according to a first embodiment of the present invention. In Fig. 1, the gain-flattening optical amplifier comprises an input port 1, an optical amplification rare earth addition fiber 2, a variable optical attenuator 3, an output port 4, optical branching means 5, ···, 5, photo-detectors 6, 6, a variable optical attenuator controller 7, a comparator 8, optical bandwidth limiters 9, and 91, a pumping source 10, a pumping light multiplexer 11, and a pumping source driver 13.

Further concretely, the gain-flattening optical amplifier of the present embodiment comprises the input port 1 of the gain-flattening optical amplifier, for inputting therein optical input signal, the optical amplification rare earth addition fiber 2 for amplifying to be outputted the inputted light signal, the variable optical attenuator 3 which operates with prescribed time constant on the occasion of outputting the inputted light while attenuating the inputted light by prescribed quantity, the pumping source 10 for generating to be outputted the pumping light, the pumping source driver 13 which operates with prescribed time constant on the occasion of driving the pumping source 10, the pumping light multiplexer 11 for multiplexing the pumping light which the pumping source 10 generates to be outputted, in order to excite the optical amplification rare earth addition fiber 2, a plurality of optical branching means 5, ···, 5 for branching optical output level, the optical bandwidth limiters 9, 91 for selecting wavelength of the branching signal light from the respective optical branching means 5, ···, 5, a plurality of the photo-detectors 6, ···, 6 for generating to be outputted optical level information while converting (light-electricity conversion) signal light passed through the optical bandwidth limiters 9, 91 into electric signal, the comparator 8 for generating to be outputted level difference information while comparing electric signals (optical level information) which the respective photo-detectors generate to be outputted, the variable optical attenuator controller 7 for controlling the variable optical attenuator 3 on the basis of the optical level information which the respective photo-detectors 6, ···, 6 generate to be outputted, in order to harmonize output level of the gain-flattening optical amplifier, the output port 4 for outputting light signal of output level controlled by the variable optical attenuator controller 7, both of the pumping light multiplexer 11 for multiplexing pumping light for exciting the optical amplification rare earth addition fiber 2, and the pumping source 10 provided in the rear direction of the optical amplification rare earth addition fiber 2. Such the optical detection constitution is characteristic of the gain-flattening optical amplifier. In this constitution of the gain-flattening optical amplifier, it is capable of realizing gain equalization function in such a way that the pumping source driver 13 controls magnitude of the pumping light from the pumping source 10 on the basis of the level difference information of the comparator 8.

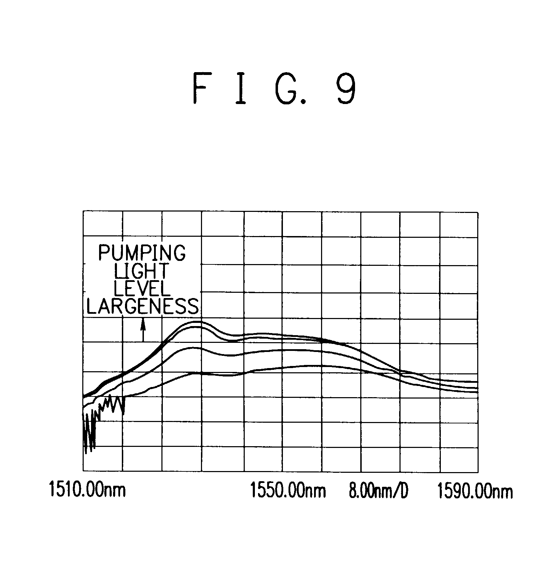

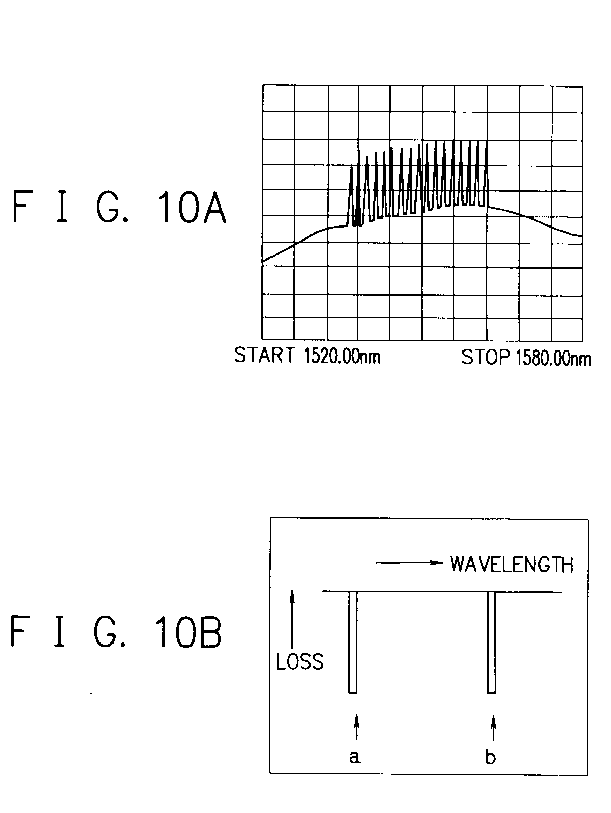

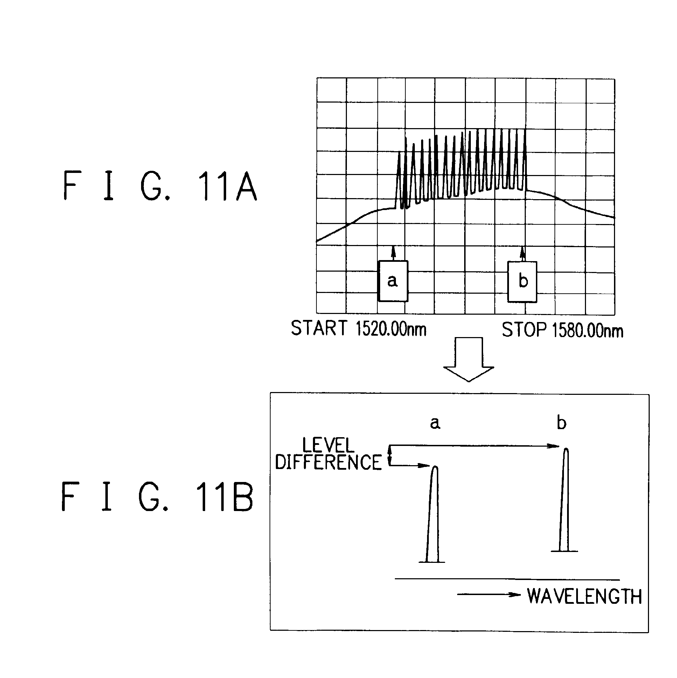

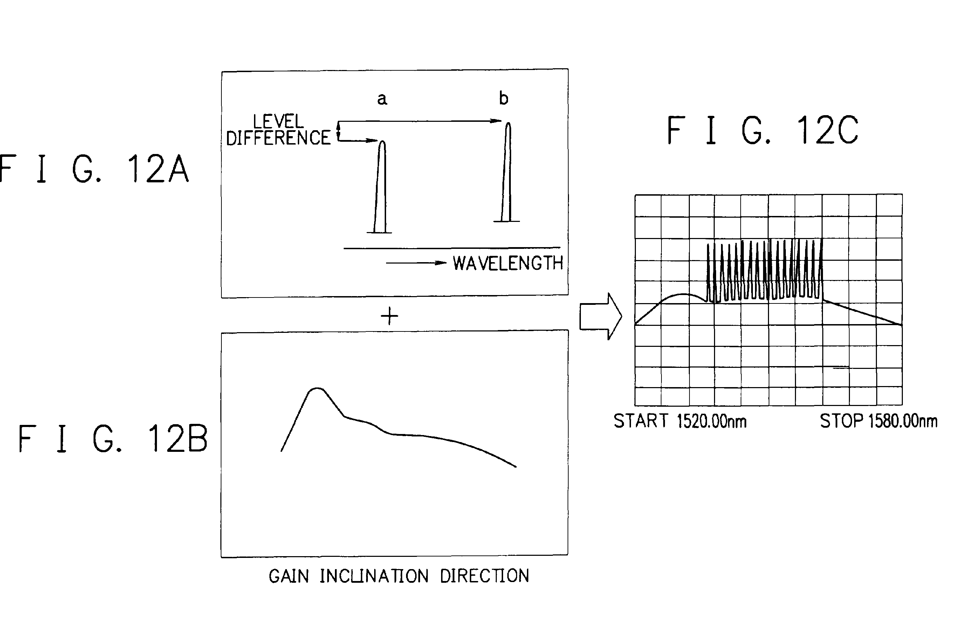

Next, there will be described operation of the constitution example of the gain-flattening optical amplifier of Fig. 1 referring to Figs. 9 to 12. Fig. 9 is a graph showing characteristic example of rare earth addition fiber with respect to input level. Fig. 10A and Fig. 10B are graphs showing characteristic example of optical bandwidth limiter 9. Fig. 11A and Fig. 11B are graphs showing characteristic example of optical bandwidth limiter 9. Fig. 12A, Fig. 12B, and Fig. 12C are graphs showing processing example of gain flattening in variable optical attenuator 3.

Generally, the gain-flattening optical amplifier whose gain dependability fluctuates as shown in Fig. 9 caused by the pumping light level of the pumping source 10, thus peak wavelength of the gain shifts to short wavelength gradually as the pumping light level increases.

The input port 1 of the gain-flattening optical amplifier inputs therein optical input signal. The optical input signal inputted to the input port 1 is amplified to the waveform as shown in Fig. 10A to be outputted by the optical amplification rare earth addition fiber 2 which is excited by the pumping source 10.

The optical amplification rare earth addition fiber 2 outputs light signal. The respective optical branching means 5, ···, 5 branch to be formed the branching light signal from the above light signal. It causes the branching light signal to be passed through the optical bandwidth limiters 9, 91 through which only required arbitrary wavelength passes. The optical bandwidth limiters 9, 91 have characteristic as shown in Figs. 10A, 10B. Subsequently, the respective photo-detectors 6, ···, 6 input therein the branching light signal passed through the respective photo-detector for the sake of light-electricity conversion.

The optical bandwidth limiter 9 receives the light signal which is inputted to respective photo-detectors 6, ···, 6. The optical bandwidth limiter 9 causes only wavelength shown in an arrow 'a' and an arrow 'b' of Fig. 11A to be passed, consequently, the light signal passed through the optical bandwidth limiter 9 becomes optical level shown in an arrow 'a' and an arrow 'b' of Fig. 11B.

On this occasion, the comparator 8 compares level difference of light signal inputted to respective photo-detectors 6, ···, 6. The variable optical attenuator controller 7 controls the variable optical attenuator 3 such that the level difference of the light signal becomes opposite direction of gain inclination direction (referred to as Fig. 12B) with respect to optical level difference of respective wavelength shown in an arrow 'a' and an arrow 'b' of Fig. 12A. According to this control, it is capable of outputting the light signal which is gain-flattened as shown in Fig. 12C.

Further, it is capable of implementing output constant control while being gain-flattened, in such a way that the variable optical attenuator controller 7 causes the variable optical attenuator 3 to be controlled so as to allow the output level to be constant based on the arbitrary one optical level inputted to respective photo-detectors 6, ···, 6.

As described above, according to the first embodiment, following effect is obtained. A first effect is that when total level of the light signal inputted to the gain-flattening optical amplifier is changed, the first embodiment has a function of automatic gain equalization. When optical level inputted to the gain-flattening optical amplifier is changed in answer to temperature characteristic, the first embodiment has a function of automatic gain equalization. Further also gain-flattening characteristic is obtained, therefore, it is capable of diminishing the gain tilt on the occasion of the wavelength division multiplexing transmission (WDM transmission). Further, a second effect is that when the gain-flattening control is executed, the output constant control also can be executed. Furthermore, a third effect is that the conventional gain-equalizing method performs the optimum design in every transmission system, however, in the present gain-flattening optical amplifier performs gain equalization in every gain-flattening optical amplifier, therefore, the system design becomes easy.

### (SECOND EMBODIMENT)

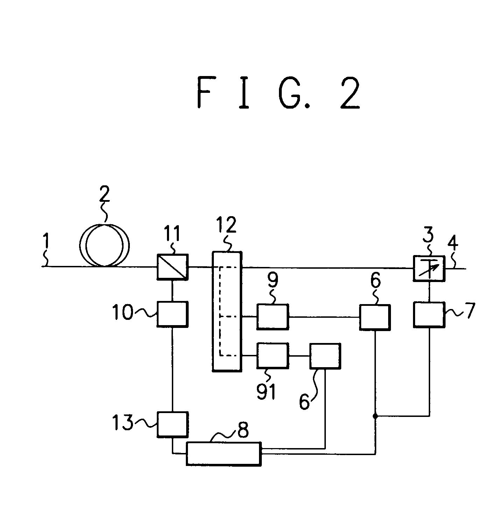

Fig. 2 is a circuit block diagram for explaining a gain-flattening optical amplifier according to a second embodiment of the present invention. In Fig. 2, the gain-flattening optical amplifier comprises an input port 1, an optical amplification rare earth addition fiber 2, a variable optical attenuator 3, an output port 4, photo-detectors 6, 6, a variable optical attenuator controller 7, a comparator 8, optical bandwidth limiters 9, and 91, a pumping source 10, a pumping light multiplexer 11, an optical demultiplexer 12, and a pumping source driver 13.

Further concretely, the gain-flattening optical amplifier of the present embodiment comprises the input port 1 of the gain-flattening optical amplifier for inputting therein optical input signal, the optical amplification rare earth addition fiber 2 for amplifying to be outputted the inputted light signal, the variable optical attenuator 3 which operates with prescribed time constant on the occasion of outputting the inputted light while attenuating the inputted light by prescribed quantity, the pumping source 10 for generating to be outputted the pumping light, the pumping source driver 13 which operates with prescribed time constant on the occasion of driving the pumping source 10, the pumping light multiplexer 11 for multiplexing the pumping light which the pumping source 10 generates to be outputted, in order to excite the optical amplification rare earth addition fiber 2, an optical demultiplexer 12, the optical bandwidth limiters 9, 91 for selecting wavelength of the branching signal light from the optical demultiplexer 12, the photo-detectors 6, 6 for generating to be outputted optical level information while converting (light-electricity conversion) signal light passed through the optical bandwidth limiters 9, 91 into electric signal, the comparator 8 for generating to be outputted level difference information while comparing electric signals (optical level information) which the respective photo-detectors generate to be outputted, the variable optical attenuator controller 7 for controlling the variable optical attenuator 3 on the basis of the optical level information which the respective photo-detectors 6, 6 generate to be outputted, in order to harmonize output level of the gain-flattening optical amplifier, the output port 4 for outputting light signal of output level controlled by the variable optical attenuator controller 7, the pumping light multiplexer 11 for multiplexing pumping light for exciting the optical amplification rare earth addition fiber 2, and the pumping source 10 provided at the rear direction of the optical amplification rare earth addition fiber 2. Such the optical detection constitution is characteristic of the gain-flattening optical amplifier. In this constitution of the gain-flattening optical amplifier, it is capable of realizing gain equalization function in such a way that the pumping source driver 13 controls magnitude of the pumping light from the pumping source 10 on the basis of the level difference information of the comparator 8.

Next, there will be described operation of the constitution example of the gain-flattening optical amplifier of Fig. 2 referring to Figs. 9 to 12. Fig. 9 is a graph showing characteristic example of rare earth addition fiber with respect to input level. Fig. 10A and Fig. 10B are graphs showing characteristic example of optical bandwidth limiter 9. Fig. 11A and Fig. 11B are graphs showing characteristic example of optical bandwidth limiter 9. Fig. 12A, Fig. 12B, and Fig. 12C are graphs showing processing example of gain flattening in variable optical attenuator 3.

Generally, the gain-flattening optical amplifier whose gain dependability fluctuates as shown in Fig. 9 according to the pumping light level of the pumping source 10, thus peak wavelength of the gain shifts to short wavelength gradually as the pumping light level increases.

The input port 1 of the gain-flattening optical amplifier inputs therein optical input signal. The optical input signal inputted to the input port 1 is amplified to the waveform as shown in Fig. 10A to be outputted by the optical amplification rare earth addition fiber 2 which is excited by the pumping source 10.

The optical amplification rare earth addition fiber 2 outputs light signal. The optical demultiplexer 12 branches to be formed the branching light signal from the above light signal. It causes the branching light signal to be passed through the optical bandwidth limiters 9, 91 through which only arbitrary wavelength passes. The optical bandwidth limiters 9, 91 have characteristic as shown in Figs. 10A, 10B. Subsequently, the respective photo-detectors 6, 6 input therein the branching light signal passed through the respective photo-detector for the sake of light-electricity conversion.

The optical bandwidth limiter 9 receives the light signal which is inputted to respective photo-detectors 6, 6. The optical bandwidth limiter 9 causes only wavelength shown in an arrow 'a' and an arrow 'b' of Fig. 11A to be passed, consequently, the light signal passed through the optical bandwidth limiter 9 becomes optical level shown in an arrow 'a' and an arrow 'b' of Fig. 11B.

On this occasion, the comparator 8 compares level difference of light signal inputted to respective photo-detectors 6, 6. The variable optical attenuator controller 7 controls the variable optical attenuator 3 such that the level difference of the light signal becomes opposite direction of gain inclination direction (referred to as Fig. 12B) with respect to optical level difference of respective wavelength shown in an arrow 'a' and an arrow 'b' of Fig. 12A. According to this control, it is capable of outputting the light signal which is gain-flattened as shown in Fig. 12C.

Further, it is capable of implementing output constant control while being gain-flattened, in such a way that the variable optical attenuator controller 7 causes the variable optical attenuator 3 to be controlled so as to allow the output level to be constant based on the arbitrary one optical level inputted to respective photo-detectors 6, ···, 6.

As described above, according to the second embodiment, following effect is obtained. A first effect is that when total level of the light signal inputted to the gain-flattening optical amplifier is changed, the first embodiment has a function of automatic gain equalization. When optical level inputted to the gain-flattening optical amplifier is changed in answer to temperature characteristic, the second embodiment has a function of automatic gain equalization. Further also gain-flattening characteristic is obtained, therefore, it is capable of diminishing the gain tilt on the occasion of the wavelength division multiplexing transmission (WDM transmission). Further, a second effect is that when the gain-flattening control is executed, the output constant control also can be executed. Furthermore, a third effect is that the conventional gain-equalizing method performs the optimum design in every transmission system, however, in the present gain-flattening optical amplifier performs gain equalization in every gain-flattening optical amplifier, therefore, the system design becomes easy.

### (THIRD EMBODIMENT)

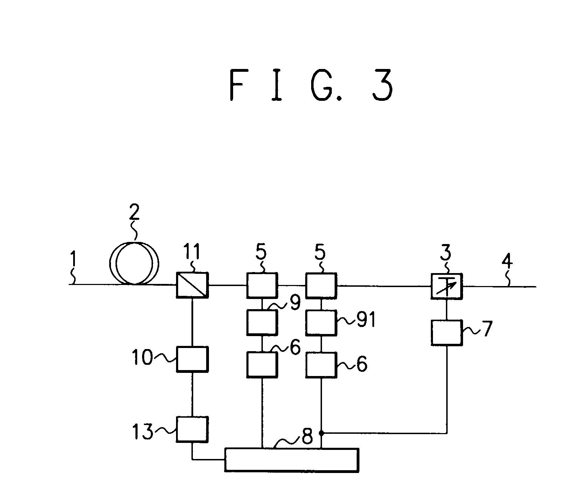

Fig. 3 is a circuit block diagram for explaining a gain-flattening optical amplifier according to a third embodiment of the present invention. In Fig. 3, the gain-flattening optical amplifier comprises an input port 1, an optical amplification rare earth addition fiber 2, a variable optical attenuator 3, an output port 4, two optical branching means 5, 5, two photo-detectors 6, 6, a variable optical attenuator controller 7, a comparator 8, optical bandwidth limiters 9, and 91, a pumping source 10, a pumping light multiplexer 11, and a pumping source driver 13.

Further concretely, the gain-flattening optical amplifier of the present embodiment comprises the input port 1 of the gain-flattening optical amplifier for inputting therein optical input signal, the optical amplification rare earth addition fiber 2 for amplifying to be outputted the inputted light signal, the variable optical attenuator 3 which operates with prescribed time constant on the occasion of outputting the inputted light while attenuating the inputted light by prescribed quantity, the pumping source 10 for generating to be outputted the pumping light, the pumping source driver 13 which operates with prescribed time constant on the occasion of driving the pumping source 10, the pumping light multiplexer 11 for multiplexing the pumping light which the pumping source 10 generates to be outputted, in order to excite the optical amplification rare earth addition fiber 2, optical branching means 5, 5 for branching optical output level provided in series in the direction of transmission path, the optical bandwidth limiters 9, 91 for selecting wavelength of the branching signal light from the respective optical branching means 5, 5, a plurality of the photo-detectors 6, 6 for generating to be outputted optical level information while converting (light-electricity conversion) signal light passed through the optical bandwidth limiters 9, 91 into electric signal, the comparator 8 for generating to be outputted level difference information while comparing electric signals (optical level information) which the respective photo-detectors generate to be outputted, the variable optical attenuator controller 7 for controlling the variable optical attenuator 3 on the basis of the optical level information which the respective photo-detectors 6, 6 generate to be outputted, in order to harmonize output level of the gain-flattening optical amplifier, the output port 4 for outputting light signal of output level controlled by the variable optical attenuator controller 7. There is provided two groups, and each one of the two groups consists of one optical branching means, one optical bandwidth limiter, and one photo-detector. Further, there are provided the pumping light multiplexer 11 for multiplexing pumping light for exciting the optical amplification rare earth addition fiber 2, and the pumping source 10 provided at the rear direction of the optical amplification rare earth addition fiber 2. Such the optical detection constitution is characteristic of the gain-flattening optical amplifier. In this constitution of the gain-flattening optical amplifier, it is capable of realizing gain equalization function in such a way that the pumping source driver 13 controls magnitude of the pumping light from the pumping source 10 on the basis of the level difference information of the comparator 8.

Next, there will be described operation of the constitution example of the gain-flattening optical amplifier of Fig.. 3 referring to Figs. 9 to 12. Fig. 9 is a graph showing characteristic example of rare earth addition fiber with respect to input level. Fig. 10A and Fig. 10B are graphs showing characteristic example of optical bandwidth limiter 9. Fig. 11A and Fig. 11B are graphs showing characteristic example of optical bandwidth limiter 9. Fig. 12A, Fig. 12B, and Fig. 12C are graphs showing processing example of gain flattening in variable optical attenuator 3.

Generally, the gain-flattening optical amplifier whose gain dependability fluctuates as shown in Fig. 9 according to the pumping light level of the pumping source 10, thus peak wavelength of the gain shifts to short wavelength gradually as the pumping light level increases.

The input port 1 of the gain-flattening optical amplifier inputs therein optical input signal. The optical input signal inputted to the input port 1 is amplified to the waveform as shown in Fig. 10A to be outputted by the optical amplification rare earth addition fiber 2 which is excited by the pumping source 10.

The optical amplification rare earth addition fiber 2 outputs light signal. The respective optical branching means 5, 5 branch to be formed the branching light signal from the above light signal. It causes the branching light signal to be passed through the optical bandwidth limiters 9, 91 through which only arbitrary wavelength passes. The optical bandwidth limiters 9, 91 have characteristic as shown in Figs. 10A, 10B. Subsequently, the respective photo-detectors 6, 6 input therein the branching light signal passed through the respective photo-detector for the sake of light-electricity conversion.

The optical bandwidth limiter 9 receives the light signal which is inputted to respective photo-detectors 6, 6. The optical bandwidth limiter 9 causes only wavelength shown in an arrow 'a' and an arrow 'b' of Fig. 11A to be passed, consequently, the light signal passed through the optical bandwidth limiter 9 becomes optical level shown in an arrow 'a' and an arrow 'b' of Fig. 11B.

On this occasion, the comparator 8 compares level difference of light signal inputted to respective photo-detectors 6, 6. The variable optical attenuator controller 7 controls the variable optical attenuator 3 such that the level difference of the light signal becomes opposite direction of gain inclination direction (referred to as Fig. 12B) with respect to optical level difference of respective wavelength shown in an arrow 'a' and an arrow 'b' of Fig. 12A. According to this control, it is capable of outputting the light signal which is gain-flattened as shown in Fig. 12C.

Further, it is capable of implementing output constant control while being gain-flattened, in such a way that the variable optical attenuator controller 7 causes the variable optical attenuator 3 to be controlled so as to allow the output level to be constant based on the arbitrary one optical level inputted to respective photo-detectors 6, ···, 6.

As described above, according to the third embodiment, following effect is obtained. A first effect is that when total level of the light signal inputted to the gain-flattening optical amplifier is changed, the first embodiment has a function of automatic gain equalization. When optical level inputted to the gain-flattening optical amplifier is changed in answer to temperature characteristic, the third embodiment has a function of automatic gain equalization. Further also gain-flattening characteristic is obtained, therefore, it is capable of diminishing the gain tilt on the occasion of the wavelength division multiplexing transmission (WDM transmission). Further, a second effect is that when the gain-flattening control is executed, the output constant control also can be executed. Furthermore, a third effect is that the conventional gain-equalizing method performs the optimum design in every transmission system, however, in the present gain-flattening optical amplifier performs gain equalization in every gain-flattening optical amplifier, therefore, the system design becomes easy.

### (FOURTH EMBODIMENT)

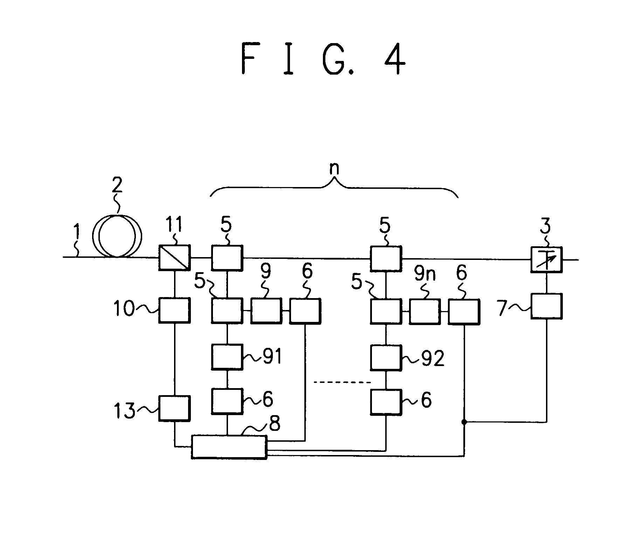

Fig. 4 is a circuit block diagram for explaining a gain-flattening optical amplifier according to a fourth embodiment of the present invention. In Fig. 4, the gain-flattening optical amplifier comprises an input port 1, an optical amplification rare earth addition fiber 2, a variable optical attenuator 3, an output port 4, optical branching means 5, ···, 5 a photo-detector 6, ···, 6 a variable optical attenuator controller 7, a comparator 8, optical bandwidth limiters 91, 92, ···, 9n, a pumping source 10, a pumping light multiplexer 11, and a pumping source driver 13.

Further concretely, the gain-flattening optical amplifier of the present embodiment comprises the input port 1 of the gain-flattening optical amplifier for inputting therein optical input signal, the optical amplification rare earth addition fiber 2 for amplifying to be outputted the inputted light signal, the variable optical attenuator 3 which operates with prescribed time constant on the occasion of outputting the inputted light while attenuating the inputted light by prescribed quantity, the pumping source 10 for generating to be outputted the pumping light, the pumping source driver 13 which operates with prescribed time constant on the occasion of driving the pumping source 10, the pumping light multiplexer 11 for multiplexing the pumping light which the pumping source 10 generates to be outputted, in order to excite the optical amplification rare earth addition fiber 2, a plurality of optical branching means 5, ···, 5 for branching optical output level, the optical bandwidth limiters 91, 92, ···, 9n for selecting wavelength of the branching signal light from the respective optical branching means 5, ···, 5, a plurality of the photo-detectors 6, ···, 6 for generating to be outputted optical level information while converting (light-electricity conversion) signal light passed through the optical bandwidth limiters 91, 92, ···, 9n, into electric signal, here these a plurality of optical branching means 5, ···, 5, the optical bandwidth limiters 91, 92, ···, 9n, and a plurality of the photo-detectors 6, ···, 6 are constituted as "n" groups of optical branching means 5, photo-detectors 6, and optical bandwidth limiter 9 as shown in Fig. 4. Respective "n" groups thereof are provided in series in the direction of transmission path, the comparator 8 for generating to be outputted level difference information while comparing electric signals (optical level information) which the respective photo-detectors generate to be outputted, the variable optical attenuator controller 7 for controlling the variable optical attenuator 3 on the basis of the optical level information which the respective photo-detectors 6, ···, 6 generate to be outputted, in order to harmonize output level of the gain-flattening optical amplifier, the output port 4 for outputting light signal of output level controlled by the variable optical attenuator controller 7. These a plurality of optical branching means, the optical bandwidth limiters, and a plurality of the photo-detectors are constituted as a plurality of respective groups which are provided in series in the direction of transmission path respectively. Further, there are provided the pumping light multiplexer 11 for multiplexing pumping light for exciting the optical amplification rare earth addition fiber 2, and the pumping source 10 are provided at the rear direction of the optical amplification rare earth addition fiber 2. Such the optical detection constitution is characteristic of the gain-flattening optical amplifier. In this constitution of the gain-flattening optical amplifier, it is capable of realizing gain equalization function in such a way that the pumping source driver 13 controls magnitude of the pumping light from the pumping source 10 on the basis of the level difference information of the comparator 8.

Next, there will be described operation of the constitution example of the gain-flattening optical amplifier of Fig.. 4 referring to Figs. 9 to 12. Fig. 9 is a graph showing characteristic example of rare earth addition fiber with respect to input level. Fig. 10A and Fig. 10B are graphs showing characteristic example of optical bandwidth limiter 9. Fig. 11A and Fig. 11B are graphs showing characteristic example of optical bandwidth limiter 9. Fig. 12A, Fig. 12B, and Fig. 12C are graphs showing processing example of gain flattening in variable optical attenuator 3.

Generally, the gain-flattening optical amplifier whose gain dependability fluctuates as shown in Fig. 9 according to the pumping light level of the pumping source 10, thus peak wavelength of the gain shifts to short wavelength gradually as the pumping light level increases.

The input port 1 of the gain-flattening optical amplifier inputs therein optical input signal. The optical input signal inputted to the input port 1 is amplified to the waveform as shown in Fig. 10A to be outputted by the optical amplification rare earth addition fiber 2 which is excited by the pumping source 10.

The optical amplification rare earth addition fiber 2 outputs light signal. The respective optical branching means 5, ···, 5 branch to be formed the branching light signal from the above light signal. It causes the branching light signal to be passed through the optical bandwidth limiters 91, 92, ···, 9n through which only arbitrary wavelength passes. The optical bandwidth limiters optical bandwidth limiters 91, 92, ···, 9n have characteristic as shown in Figs. 10A, 10B. Subsequently, the respective photo-detectors 6, ···, 6 input therein the branching light signal passed through the respective photo-detector for the sake of light-electricity conversion.

The optical bandwidth limiter 9 receives the light signal which is inputted to respective photo-detectors 6, ···, 6. The optical bandwidth limiter 9 causes only wavelength shown in an arrow 'a' and an arrow 'b' of Fig. 11A to be passed, consequently, the light signal passed through the optical bandwidth limiter 9 becomes optical level shown in an arrow 'a' and an arrow 'b' of Fig. 11B.

On this occasion, the comparator 8 compares level difference of light signal inputted to respective photo-detectors 6, ···, 6. The variable optical attenuator controller 7 controls the variable optical attenuator 3 such that the level difference of the light signal becomes opposite direction of gain inclination direction (referred to as Fig. 12B) with respect to optical level difference of respective wavelength shown in an arrow 'a' and an arrow 'b' of Fig. 12A. According to this control, it is capable of outputting the light signal which is gain-flattened as shown in Fig. 12C.

Further, it is capable of implementing output constant control while being gain-flattened, in such a way that the variable optical attenuator controller 7 causes the variable optical attenuator 3 to be controlled so as to allow the output level to be constant based on the arbitrary one optical level inputted to respective photo-detectors 6, ···, 6.

As described above, according to the fourth embodiment, following effect is obtained. A first effect is that when total level of the light signal inputted to the gain-flattening optical amplifier is changed, the first embodiment has a function of automatic gain equalization. When optical level inputted to the gain-flattening optical amplifier is changed in answer to temperature characteristic, the fourth embodiment has a function of automatic gain equalization. Further also gain-flattening characteristic is obtained, therefore, it is capable of diminishing the gain tilt on the occasion of the wavelength division multiplexing transmission (WDM transmission). Further, a second effect is that when the gain-flattening control is executed, the output constant control also can be executed. Furthermore, a third effect is that the conventional gain-equalizing method performs the optimum design in every transmission system, however, in the present gain-flattening optical amplifier performs gain equalization in every gain-flattening optical amplifier, therefore, the system design becomes easy.

### (FIFTH EMBODIMENT)

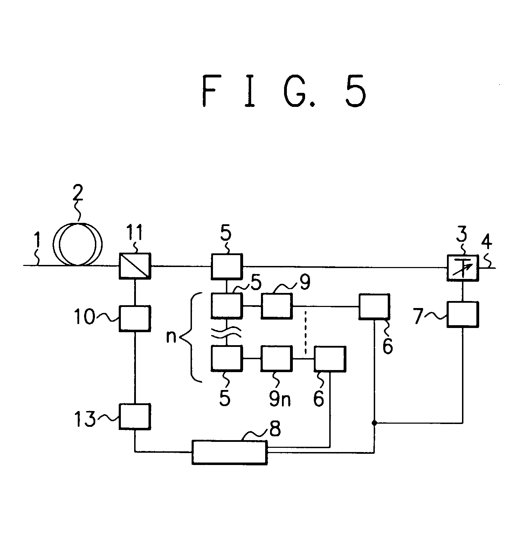

Fig. 5 is a circuit block diagram for explaining a gain-flattening optical amplifier according to a fifth embodiment of the present invention. In Fig. 5, the gain-flattening optical amplifier comprises an input port 1, an optical amplification rare earth addition fiber 2, a variable optical attenuator 3, an output port 4, a plurality of optical branching means 5, ···, 5, a plurality of photo-detectors 6, ···, 6, a variable optical attenuator controller 7, a comparator 8, optical bandwidth limiters 9, ···, 9n, a pumping source 10, a pumping light multiplexer 11, and a pumping source driver 13.

Further concretely, the gain-flattening optical amplifier of the present fifth embodiment comprises the input port 1 of the gain-flattening optical amplifier for inputting therein optical input signal, the optical amplification rare earth addition fiber 2 for amplifying to be outputted the inputted light signal, the variable optical attenuator 3 which operates with prescribed time constant on the occasion of outputting the inputted light while attenuating the inputted light by prescribed quantity, the pumping source 10 for generating to be outputted the pumping light, the pumping source driver 13 which operates with prescribed time constant on the occasion of driving the pumping source 10, the pumping light multiplexer 11 for multiplexing the pumping light which the pumping source 10 generates to be outputted, in order to excite the optical amplification rare earth addition fiber 2, a plurality of optical branching means 5, ···, 5 for branching optical output level, the optical bandwidth limiters 9, ···, 9n for selecting wavelength of the branching signal light from the respective optical branching means 5, ···, 5, a plurality of the photo-detectors 6, ···, 6 for generating to be outputted optical level information while converting (light-electricity conversion) signal light passed through the optical bandwidth limiters 9, ···, 9n into electric signal, the comparator 8 for generating to be outputted level difference information while comparing electric signals (optical level information) which the respective photo-detectors generate to be outputted, the variable optical attenuator controller 7 for controlling the variable optical attenuator 3 on the basis of the optical level information which the respective photo-detectors 6, ···, 6 generate to be outputted, in order to harmonize output level of the gain-flattening optical amplifier, the output port 4 for outputting light signal of output level controlled by the variable optical attenuator controller 7. There are provided a plurality of groups and the group consists of the optical branching means, the optical bandwidth limiter, and the photo-detector, arranged in parallel in the direction of the transmission path. Further, there are provided the pumping light multiplexer 11 for multiplexing pumping light for exciting the optical amplification rare earth addition fiber 2, and the pumping source 10 provided at the rear direction of the optical amplification rare earth addition fiber 2. Such the optical detection constitution of optical branching means 5, the optical bandwidth limiter 9, and the photo-detectors 6 are provided by "n" groups in parallel in the direction of the transmission path, that is characteristic of the fifth embodiment of the gain-flattening optical amplifier. In this constitution of the gain-flattening optical amplifier, it is capable of realizing gain equalization function in such a way that the pumping source driver 13 controls magnitude of the pumping light from the pumping source 10 on the basis of the level difference information of the comparator 8.

Next, there will be described operation of the constitution example of the gain-flattening optical amplifier of Fig.. 5 referring to Figs. 9 to 12. Fig. 9 is a graph showing characteristic example of rare earth addition fiber with respect to input level. Fig. 10A and Fig. 10B are graphs showing characteristic example of optical bandwidth limiter 9. Fig. 11A and Fig. 11B are graphs showing characteristic example of optical bandwidth limiter 9. Fig. 12A, Fig. 12B, and Fig. 12C are graphs showing processing example of gain flattening in variable optical attenuator 3.

Generally, the gain-flattening optical amplifier whose gain dependability fluctuates as shown in Fig. 9 according to the pumping light level of the pumping source 10, thus peak wavelength of the gain shifts to short wavelength gradually as the pumping light level increases.

The input port 1 of the gain-flattening optical amplifier inputs therein optical input signal. The optical input signal inputted to the input port 1 is amplified to the waveform as shown in Fig. 10A to be outputted by the optical amplification rare earth addition fiber 2 which is excited by the pumping source 10.

The optical amplification rare earth addition fiber 2 outputs light signal. The respective optical branching means 5, ···, 5 branch to be formed the branching light signal from the above light signal. It causes the branching light signal to be passed through the optical bandwidth limiters 9, ···, 9n through which only arbitrary wavelength passes. The optical bandwidth limiters 9, ···, 9n, have characteristic as shown in Figs. 10A, 10B. Subsequently, the respective photo-detectors 6, ···, 6 input therein the branching light signal passed through the respective photo-detector for the sake of light-electricity conversion.

The optical bandwidth limiter 9 receives the light signal which is inputted to respective photo-detectors 6, ···, 6. The optical bandwidth limiter 9 causes only wavelength shown in an arrow 'a' and an arrow 'b' of Fig. 11A to be passed, consequently, the light signal passed through the optical bandwidth limiter 9 becomes optical level shown in an arrow 'a' and an arrow 'b' of Fig. 11B.

On this occasion, the comparator 8 compares level difference of light signal inputted to respective photo-detectors 6, ···, 6. The variable optical attenuator controller 7 controls the variable optical attenuator 3 such that the level difference of the light signal becomes opposite direction of gain inclination direction (referred to as Fig. 12B) with respect to optical level difference of respective wavelength shown in an arrow 'a' and an arrow 'b' of Fig. 12A. According to this control, it is capable of outputting the light signal which is gain-flattened as shown in Fig. 12C.

Further, it is capable of implementing output constant control while being gain-flattened, in such a way that the variable optical attenuator controller 7 causes the variable optical attenuator 3 to be controlled so as to allow the output level to be constant based on the arbitrary one optical level inputted to respective photo-detectors 6, ···, 6.

As described above, according to the fifth embodiment, following effect is obtained. A first effect is that when total level of the light signal inputted to the gain-flattening optical amplifier is changed, the first embodiment has a function of automatic gain equalization. When optical level inputted to the gain-flattening optical amplifier is changed in answer to temperature characteristic, the fifth embodiment has a function of automatic gain equalization. Further also gain-flattening characteristic is obtained, therefore, it is capable of diminishing the gain tilt on the occasion of the wavelength division multiplexing transmission (WDM transmission). Further, a second effect is that when the gain-flattening control is executed, the output constant control also can be executed. Furthermore, a third effect is that the conventional gain-equalizing method performs the optimum design in every transmission system, however, in the present gain-flattening optical amplifier performs gain equalization in every gain-flattening optical amplifier, therefore, the system design becomes easy.

### (SIXTH EMBODIMENT)

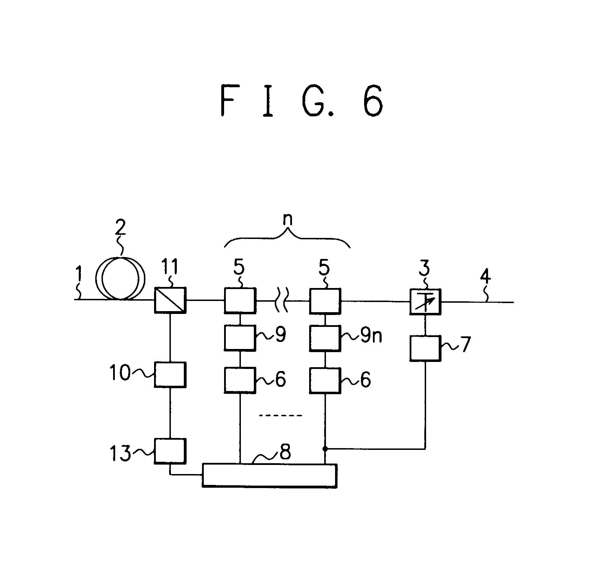

Fig. 6 is a circuit block diagram for explaining a gain-flattening optical amplifier according to a sixth embodiment of the present invention. In Fig. 6, the gain-flattening optical amplifier comprises an input port 1, an optical amplification rare earth addition fiber 2, a variable optical attenuator 3, an output port 4, a plurality of optical branching means 5, ···, 5, a plurality of photo-detector 6, ···, 6, a variable optical attenuator controller 7, a comparator 8, a plurality of optical bandwidth limiter 9, ···, 9, a pumping source 10, a pumping light multiplexer 11, and a pumping source driver 13.

Further concretely, the gain-flattening optical amplifier of the present embodiment comprises the input port 1 of the gain-flattening optical amplifier for inputting therein optical input signal, the optical amplification rare earth addition fiber 2 for amplifying to be outputted the inputted light signal, the variable optical attenuator 3 which operates with prescribed time constant on the occasion of outputting the inputted light while attenuating the inputted light by prescribed quantity, the pumping source 10 for generating to be outputted the pumping light, the pumping source driver 13 which operates with prescribed time constant on the occasion of driving the pumping source 10, the pumping light multiplexer 11 for multiplexing the pumping light which the pumping source 10 generates to be outputted, in order to excite the optical amplification rare earth addition fiber 2, optical branching means 5, ···, 5 for branching optical output level, the optical bandwidth limiters 9, ···, 9n for selecting wavelength of the branching signal light from the respective optical branching means 5, ···, 5, a plurality of the photo-detectors 6, ···, 6 for generating to be outputted optical level information while converting (light-electricity conversion) signal light passed through the optical bandwidth limiters 9, ··· , 9n into electric signal, the comparator 8 for generating to be outputted level difference information while comparing electric signals (optical level information) which the respective photo-detectors generate to be outputted, the variable optical attenuator controller 7 for controlling the variable optical attenuator 3 on the basis of the optical level information which the respective photo-detectors 6, ···, 6 generate to be outputted, in order to harmonize output level of the gain-flattening optical amplifier, the output port 4 for outputting light signal of output level controlled by the variable optical attenuator controller 7. There are provided a plurality of groups, and each group thereof consists of the optical branching means, the optical bandwidth limiter, and the photo-detector, in series in the direction of the transmission path. Further, there provided the pumping light multiplexer 11 for multiplexing pumping light for exciting the optical amplification rare earth addition fiber 2, and the pumping source 10 provided at the rear direction of the optical amplification rare earth addition fiber 2. Such the optical detection constitution of the optical branching means 5, the optical bandwidth limiter 9, and the photo-detector 6 shown in Fig. 6 is characteristic of the sixth embodiment of gain-flattening optical amplifier. In this constitution of the gain-flattening optical amplifier, it is capable of realizing gain equalization function in such a way that the pumping source driver 13 controls magnitude of the pumping light from the pumping source 10 on the basis of the level difference information of the comparator 8.

Next, there will be described operation of the constitution example of the gain-flattening optical amplifier of Fig.. 6 referring to Figs. 9 to 12. Fig. 9 is a graph showing characteristic example of rare earth addition fiber with respect to input level. Fig. 10A and Fig. 10B are graphs showing characteristic example of optical bandwidth limiter 9. Fig. 11A and Fig. 11B are graphs showing characteristic example of optical bandwidth limiter 9. Fig. 12A, Fig. 12B, and Fig. 12C are graphs showing processing example of gain flattening in variable optical attenuator 3.

Generally, the gain-flattening optical amplifier whose gain dependability fluctuates as shown in Fig. 9 according to the pumping light level of the pumping source 10, thus peak wavelength of the gain shifts to short wavelength gradually as the pumping light level increases.

The input port 1 of the gain-flattening optical amplifier inputs therein optical input signal. The optical input signal inputted to the input port 1 is amplified to the waveform as shown in Fig. 10A to be outputted by the optical amplification rare earth addition fiber 2 which is excited by the pumping source 10.

The optical amplification rare earth addition fiber 2 outputs light signal. The respective optical branching means 5, ···, 5 branch to be formed the branching light signal from the above light signal. It causes the branching light signal to be passed through the optical bandwidth limiters 9, ···, 9n through which only arbitrary wavelength passes. The optical bandwidth limiters 9, ···, 9n have characteristic as shown in Figs. 10A, 10B. Subsequently, the respective photo-detectors 6, ···, 6 input therein the branching light signal passed through the respective photo-detector for the sake of light-electricity conversion.

The optical bandwidth limiter 9, ···, 9n receive the light signal which is inputted to respective photo-detectors 6, ···, 6. The optical bandwidth limiter 9, ···, 9n cause only wavelength shown in an arrow 'a' and an arrow 'b' of Fig. 11A to be passed, consequently, the light signal passed through the optical bandwidth limiter 9, ···, 9n become optical level shown in an arrow 'a' and an arrow 'b' of Fig. 11B.

On this occasion, the comparator 8 compares level difference of light signal inputted to respective photo-detectors 6, ···, 6. The variable optical attenuator controller 7 controls the variable optical attenuator 3 such that the level difference of the light signal becomes opposite direction of gain inclination direction (referred to as Fig. 12B) with respect to optical level difference of respective wavelength shown in an arrow 'a' and an arrow 'b' of Fig. 12A. According to this control, it is capable of outputting the light signal which is gain-flattened as shown in Fig. 12C.

Further, it is capable of implementing output constant control while being gain-flattened, in such a way that the variable optical attenuator controller 7 causes the variable optical attenuator 3 to be controlled so as to allow the output level to be constant based on the arbitrary one optical level inputted to respective photo-detectors 6, ···, 6.

As described above, according to the sixth embodiment, following effect is obtained. A first effect is that when total level of the light signal inputted to the gain-flattening optical amplifier is changed, the sixth embodiment has a function of automatic gain equalization. When optical level inputted to the gain-flattening optical amplifier is changed in answer to temperature characteristic, the sixth embodiment has a function of automatic gain equalization. Further also gain-flattening characteristic is obtained, therefore, it is capable of diminishing the gain tilt on the occasion of the wavelength division multiplexing transmission (WDM transmission). Further, a second effect is that when the gain-flattening control is executed, the output constant control also can be executed. Furthermore, a third effect is that the conventional gain-equalizing method performs the optimum design in every transmission system, however, in the present gain-flattening optical amplifier performs gain equalization in every gain-flattening optical amplifier, therefore, the system design becomes easy.

### (SEVENTH EMBODIMENT)

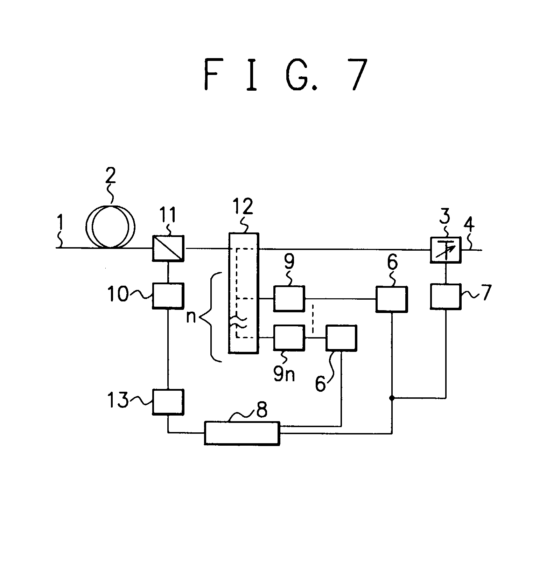

Fig. 7 is a circuit block diagram for explaining a gain-flattening optical amplifier according to a seventh embodiment of the present invention. In Fig. 7, the gain-flattening optical amplifier comprises an input port 1, an optical amplification rare earth addition fiber 2, a variable optical attenuator 3, an output port 4, a plurality of photo-detectors 6, ···, 6, a variable optical attenuator controller 7, a comparator 8, a plurality of optical bandwidth limiter 9, ···, 9n a pumping source 10, a pumping light multiplexer 11, an optical demultiplexers 12, and a pumping source driver 13.

Further concretely, the gain-flattening optical amplifier of the present embodiment comprises the input port 1 of the gain-flattening optical amplifier for inputting therein optical input signal, the optical amplification rare earth addition fiber 2 for amplifying to be outputted the inputted light signal, the variable optical attenuator 3 which operates with prescribed time constant on the occasion of outputting the inputted light while attenuating the inputted light by prescribed quantity, the pumping source 10 for generating to be outputted the pumping light, the pumping source driver 13 which operates with prescribed time constant on the occasion of driving the pumping source 10, the pumping light multiplexer 11 for multiplexing the pumping light which the pumping source 10 generates to be outputted, in order to excite the optical amplification rare earth addition fiber 2, the optical bandwidth limiters 9, ···, 9n for selecting wavelength of the branching signal light from the optical demultiplexers 12, a plurality of the photo-detectors 6, ···, 6 for generating to be outputted optical level information while converting (light-electricity conversion) signal light passed through the optical bandwidth limiters 9, ···, 9n into electric signal, the comparator 8 for generating to be outputted level difference information while comparing electric signals (optical level information) which the respective photo-detectors generate to be outputted, the variable optical attenuator controller 7 for controlling the variable optical attenuator 3 on the basis of the optical level information which the respective photo-detectors 6, ···, 6 generate to be outputted, in order to harmonize output level of the gain-flattening optical amplifier, the output port 4 for outputting light signal of output level controlled by the variable optical attenuator controller 7. There are provided a plurality of groups, and each group thereof consists of the optical branching means, the optical bandwidth limiter, and the photo-detector, in series in the direction of the transmission path. Further, there are provided the pumping light multiplexer 11 for multiplexing pumping light for exciting the optical amplification rare earth addition fiber 2, and the pumping source 10 provided at the rear direction of the optical amplification rare earth addition fiber 2. Such the optical detection constitution of the wavelength limiters 9, ···, 9n and photo-detector 6, ···, 6 which are constituted in parallel to the optical demultiplexer 12 as the optical branching means and in the direction of the transmission path as shown in Fig. 7 is characteristic of the seventh embodiment of the gain-flattening optical amplifier. In this constitution of the gain-flattening optical amplifier, it is capable of realizing gain equalization function in such a way that the pumping source driver 13 controls magnitude of the pumping light from the pumping source 10 on the basis of the level difference information of the comparator 8.

Next, there will be described operation of the constitution example of the gain-flattening optical amplifier of Fig.. 7 referring to Figs. 9 to 12. Fig. 9 is a graph showing characteristic example of rare earth addition fiber with respect to input level. Fig. 10A and Fig. 10B are graphs showing characteristic example of optical bandwidth limiters 9, ···, 9n. Fig. 11A and Fig. 11B are graphs showing characteristic example of optical bandwidth limiters 9, ···, 9n. Fig. 12A, Fig. 12B, and Fig. 12C are graphs showing processing example of gain flattening in variable optical attenuator 3.

Generally, the gain-flattening optical amplifier whose gain dependability fluctuates as shown in Fig. 9 according to the pumping light level of the pumping source 10, thus peak wavelength of the gain shifts to short wavelength gradually as the pumping light level increases.

The input port 1 of the gain-flattening optical amplifier inputs therein optical input signal. The optical input signal inputted to the input port 1 is amplified to the waveform as shown in Fig. 10A to be outputted by the optical amplification rare earth addition fiber 2 which is excited by the pumping source 10.

The optical amplification rare earth addition fiber 2 outputs light signal. The optical demultiplexer 12 branches to be formed the branching light signal from the above light signal. It causes the branching light signal to be passed through the optical bandwidth limiters 9, ···, 9n through which only arbitrary wavelength passes. The optical bandwidth limiters 9, ···, 9n have characteristic as shown in Figs. 10A, 10B. Subsequently, the respective photo-detectors 6, ···, 6 input therein the branching light signal passed through the respective photo-detector for the sake of light-electricity conversion.

The optical bandwidth limiter 9, ···, 9n receive the light signal which is inputted to respective photo-detectors 6, ···, 6. The optical bandwidth limiter 9, ···, 9n cause only wavelength shown in an arrow 'a' and an arrow 'b' of Fig. 11A to be passed, consequently, the light signal passed through the optical bandwidth limiter 9, ···, 9n becomes optical level shown in an arrow 'a' and an arrow 'b' of Fig. 11B.

On this occasion, the comparator 8 compares level difference of light signal inputted to respective photo-detectors 6, ···, 6. The variable optical attenuator controller 7 controls the variable optical attenuator 3 such that the level difference of the light signal becomes opposite direction of gain inclination direction (referred to as Fig. 12B) with respect to optical level difference of respective wavelength shown in an arrow 'a' and an arrow 'b' of Fig. 12A. According to this control, it is capable of outputting the light signal which is gain-flattened as shown in Fig. 12C.

Further, it is capable of implementing output constant control while being gain-flattened, in such a way that the variable optical attenuator controller 7 causes the variable optical attenuator 3 to be controlled so as to allow the output level to be constant based on the arbitrary one optical level inputted to respective photo-detectors 6, ···, 6.

As described above, according to the seventh embodiment, following effect is obtained. A first effect is that when total level of the light signal inputted to the gain-flattening optical amplifier is changed, the seventh embodiment has a function of automatic gain equalization. When optical level inputted to the gain-flattening optical amplifier is changed in answer to temperature characteristic, the seventh embodiment has a function of automatic gain equalization. Further also gain-flattening characteristic is obtained, therefore, it is capable of diminishing the gain tilt on the occasion of the wavelength division multiplexing transmission (WDM transmission). Further, a second effect is that when the gain-flattening control is executed, the output constant control also can be executed. Furthermore, a third effect is that the conventional gain-equalizing method performs the optimum design in every transmission system, however, in the present gain-flattening optical amplifier performs gain equalization in every gain-flattening optical amplifier, therefore, the system design becomes easy.

### (EIGHTH EMBODIMENT)

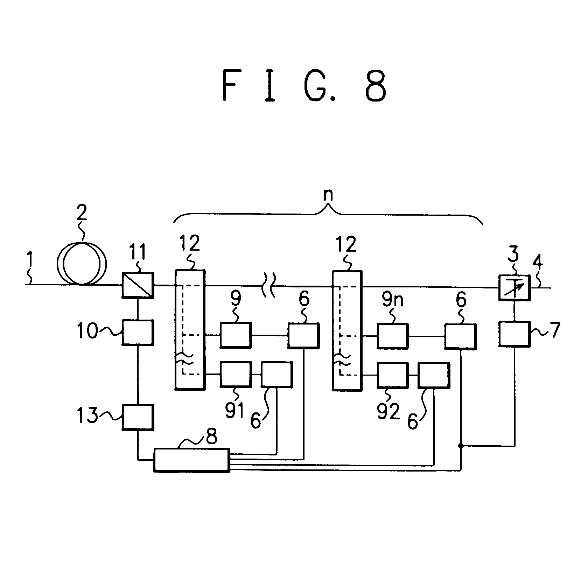

Fig. 8 is a circuit block diagram for explaining a gain-flattening optical amplifier according to an eighth embodiment of the present invention. In Fig. 8, the gain-flattening optical amplifier comprises an input port 1, an optical amplification rare earth addition fiber 2, a variable optical attenuator 3, an output port 4, photo-detectors 6, ···, 6 a variable optical attenuator controller 7, a comparator 8, optical bandwidth limiters 9, ···, 9n, a pumping source 10, a pumping light multiplexer 11, optical demultiplexers 12, ···, 12, and a pumping source driver 13.

Further concretely, the gain-flattening optical amplifier of the present embodiment comprises the input port 1 of the gain-flattening optical amplifier for inputting therein optical input signal, the optical amplification rare earth addition fiber 2 for amplifying to be outputted the inputted light signal, the variable optical attenuator 3 which operates with prescribed time constant on the occasion of outputting the inputted light while attenuating the inputted light by prescribed quantity, the pumping source 10 for generating to be outputted the pumping light, the pumping source driver 13 which operates with prescribed time constant on the occasion of driving the pumping source 10, the pumping light multiplexer 11 for multiplexing the pumping light which the pumping source 10 generates to be outputted, in order to excite the optical amplification rare earth addition fiber 2, the optical bandwidth limiters 9, ···, 9n for selecting wavelength of the branching signal light from the respective optical demultiplexer 12, ···, 12, a plurality of the photo-detectors 6, ···, 6 for generating to be outputted optical level information while converting (light-electricity conversion) signal light passed through the optical bandwidth limiters 9, ··· , 9n into electric signal, the comparator 8 for generating to be outputted level difference information while comparing electric signals (optical level information) which the respective photo-detectors generate to be outputted, the variable optical attenuator controller 7 for controlling the variable optical attenuator 3 on the basis of the optical level information which the respective photo-detectors 6, ···, 6 generate to be outputted, in order to harmonize output level of the gain-flattening optical amplifier, the output port 4 for outputting light signal of output level controlled by the variable optical attenuator controller 7. A plurality of groups are provided, and each one of the plurality groups consists of the one optical branching means, the plural optical bandwidth limiters, and the plural photo-detectors, in series, in the direction of the transmission path. Further, there are provided the pumping light multiplexer 11 for multiplexing pumping light for exciting the optical amplification rare earth addition fiber 2, and the pumping source 10 provided at the rear direction of the optical amplification rare earth addition fiber 2. Such the optical detection constitution of the optical demultiplexers 12, ···, 12, wavelength limiters 9, ···, 9n and photo-detector 6, ···, 6 which are constituted in series in the direction of the transmission path as shown in Fig. 8 is characteristic of the eighth embodiment of the gain-flattening optical amplifier. In this constitution of the gain-flattening optical amplifier, it is capable of realizing gain equalization function in such a way that the pumping source driver 13 controls magnitude of the pumping light from the pumping source 10 on the basis of the level difference information of the comparator 8.

Next, there will be described operation of the constitution example of the gain-flattening optical amplifier of Fig.. 8 referring to Figs. 9 to 12. Fig. 9 is a graph showing characteristic example of rare earth addition fiber with respect to input level. Fig. 10A and Fig. 10B are graphs showing characteristic example of optical bandwidth limiters 9, ···, 9n. Fig. 11A and Fig. 11B are graphs showing characteristic example of optical bandwidth limiters 9, ···, 9n. Fig. 12A, Fig. 12B, and Fig. 12C are graphs showing processing example of gain flattening in variable optical attenuator 3.

Generally, the gain-flattening optical amplifier whose gain dependability fluctuates as shown in Fig. 9 according to the pumping light level of the pumping source 10, thus peak wavelength of the gain shifts to short wavelength gradually as the pumping light level increases.

The input port 1 of the gain-flattening optical amplifier inputs therein optical input signal. The optical input signal inputted to the input port 1 is amplified to the waveform as shown in Fig. 10A to be outputted by the optical amplification rare earth addition fiber 2 which is excited by the pumping source 10.

The optical amplification rare earth addition fiber 2 outputs light signal. The optical demultiplexers 12, ···, 12 branch to be formed the branching light signal from the above light signal. It causes the branching light signal to be passed through the optical bandwidth limiters 9, ···, 9n through which only arbitrary wavelength passes. The optical bandwidth limiters 9, ···, 9n have characteristic as shown in Figs. 10A, 10B. Subsequently, the respective photo-detectors 6, ···, 6 input therein the branching light signal passed through the respective photo-detector for the sake of light-electricity conversion.

The optical bandwidth limiter 9, ···, 9n receive the light signal which is inputted to respective photo-detectors 6, ···, 6. The optical bandwidth limiter 9, ···, 9n cause only wavelength shown in an arrow 'a' and an arrow 'b' of Fig. 11A to be passed, consequently, the light signal passed through the optical bandwidth limiter 9, ···, 9n becomes optical level shown in an arrow 'a' and an arrow 'b' of Fig. 11B.

On this occasion, the comparator 8 compares level difference of light signal inputted to respective photo-detectors 6, ···, 6. The variable optical attenuator controller 7 controls the variable optical attenuator 3 such that the level difference of the light signal becomes opposite direction of gain inclination direction (referred to as Fig. 12B) with respect to optical level difference of respective wavelength shown in an arrow 'a' and an arrow 'b' of Fig. 12A. According to this control, it is capable of outputting the light signal which is gain-flattened as shown in Fig. 12C.

Further, it is capable of implementing output constant control while being gain-flattened, in such a way that the variable optical attenuator controller 7 causes the variable optical attenuator 3 to be controlled so as to allow the output level to be constant based on the arbitrary one optical level inputted to respective photo-detectors 6, ···, 6.

As described above, according to the eighth embodiment, following effect is obtained. A first effect is that when total level of the light signal inputted to the gain-flattening optical amplifier is changed, the eighth embodiment has a function of automatic gain equalization. When optical level inputted to the gain-flattening optical amplifier is changed in answer to temperature characteristic, the eighth embodiment has a function of automatic gain equalization. Further also gain-flattening characteristic is obtained, therefore, it is capable of diminishing the gain tilt on the occasion of the wavelength division multiplexing transmission (WDM transmission). Further, a second effect is that when the gain-flattening control is executed, the output constant control also can be executed. Furthermore, a third effect is that the conventional gain-equalizing method performs the optimum design in every transmission system, however, in the present gain-flattening optical amplifier performs gain equalization in every gain-flattening optical amplifier, therefore, the system design becomes easy.

### (NINTH EMBODIMENT)

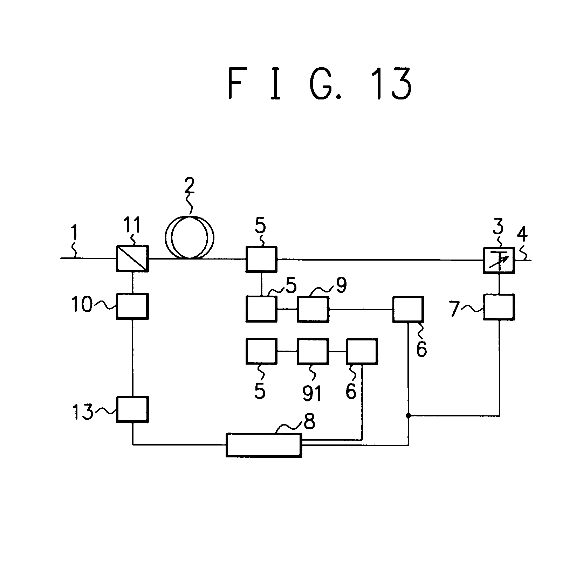

Fig. 13 is a circuit block diagram for explaining a gain-flattening optical amplifier according to a ninth embodiment of the present invention. Referring to Fig. 13, the gain-flattening optical amplifier of the present embodiment comprises the input port 1 of the gain-flattening optical amplifier for inputting therein optical input signal, the optical amplification rare earth addition fiber 2 for amplifying to be outputted the inputted light signal, the variable optical attenuator 3 which operates with prescribed time constant on the occasion of outputting the inputted light while attenuating the inputted light by prescribed quantity, the pumping source 10 for generating to be outputted the pumping light, the pumping source driver 13 which operates with prescribed time constant on the occasion of driving the pumping source 10, the pumping light multiplexer 11 for multiplexing the pumping light which the pumping source 10 generates to be outputted in order to excite the optical amplification rare earth addition fiber 2, a plurality of optical branching means 5, ···, 5 for branching optical output level, the optical bandwidth limiters 9, 91 for selecting wavelength of the branching signal light from the respective optical branching means 5, ···, 5, a plurality of the photo-detectors 6, ···, 6 for generating to be outputted optical level information while converting (light-electricity conversion) signal light passed through the optical bandwidth limiters 9, 91 into electric signal, the comparator 8 for generating to be outputted level difference information while comparing electric signals (optical level information) which the respective photo-detectors generate to be outputted, the variable optical attenuator controller 7 for controlling the variable optical attenuator 3 on the basis of the optical level information which the respective photo-detectors 6, ···, 6 generate to be outputted in order to harmonize output level of the gain-flattening optical amplifier, and the output port 4 for outputting light signal with output level controlled by the variable optical attenuator controller 7. Further, the pumping light multiplexer 11 for multiplexing pumping light for exciting the optical amplification rare earth addition fiber 2, and the pumping source 10 are provided in the front direction of the optical amplification rare earth addition fiber 2. Such the optical detection constitution is characteristic of the ninth embodiment of the gain-flattening optical amplifier. In this constitution of the gain-flattening optical amplifier, it is capable of realizing gain equalization function in such a way that the pumping source driver 13 controls magnitude of the pumping light from the pumping source 10 on the basis of the level difference information of the comparator 8.

As described above, according to the ninth embodiment, following effect is obtained. A first effect is that when total level of the light signal inputted to the gain-flattening optical amplifier is changed, the ninth embodiment has a function of automatic gain equalization. When optical level inputted to the gain-flattening optical amplifier is changed in answer to temperature characteristic, the ninth embodiment has a function of automatic gain equalization. Further also gain-flattening characteristic is obtained, therefore, it is capable of diminishing the gain tilt on the occasion of the wavelength division multiplexing transmission (WDM transmission). Further, a second effect is that when the gain-flattening control is executed, the output constant control also can be executed. Furthermore, a third effect is that the conventional gain-equalizing method performs the optimum design in every transmission system, however, in the present gain-flattening optical amplifier performs gain equalization in every gain-flattening optical amplifier, therefore, the system design becomes easy.

### (TENTH EMBODIMENT)

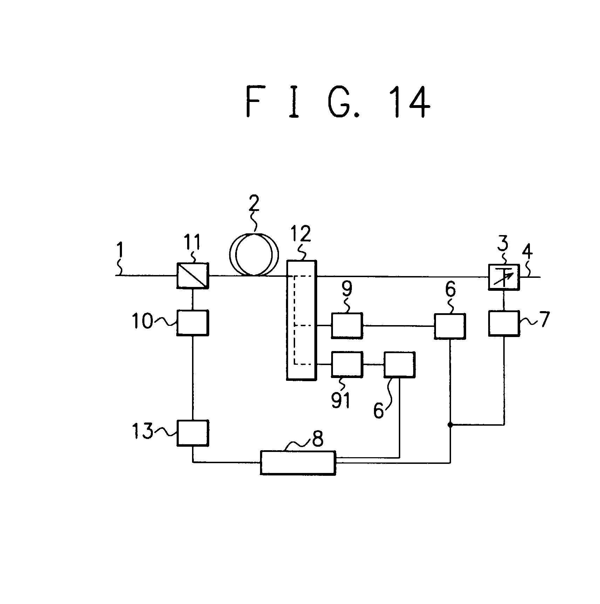

Fig. 14 is a circuit block diagram for explaining a gain-flattening optical amplifier according to a tenth embodiment of the present invention. In Fig. 14, the gain-flattening optical amplifier of the present embodiment comprises the input port 1 of the gain-flattening optical amplifier for inputting therein optical input signal, the optical amplification rare earth addition fiber 2 for amplifying to be outputted the inputted light signal, the variable optical attenuator 3 which operates with prescribed time constant on the occasion of outputting the inputted light while attenuating the inputted light by prescribed quantity, the pumping source 10 for generating to be outputted the pumping light, the pumping source driver 13 which operates with prescribed time constant on the occasion of driving the pumping source 10, the pumping light multiplexer 11 for multiplexing the pumping light which the pumping source 10 generates to be outputted, in order to excite the optical amplification rare earth addition fiber 2, the optical bandwidth limiters 9, 91 for selecting wavelength of the branching signal light from the respective optical demultiplexer 12, a plurality of the photo-detectors 6, ···, 6 for generating to be outputted optical level information while converting (light-electricity conversion) signal light passed through the optical bandwidth limiters 9, 91 into electric signal, the comparator 8 for generating to be outputted level difference information while comparing electric signals (optical level information) which the respective photo-detectors generate to be outputted, the variable optical attenuator controller 7 for controlling the variable optical attenuator 3 on the basis of the optical level information which the respective photo-detectors 6, ···, 6 generate to be outputted, in order to harmonize output level of the gain-flattening optical amplifier, and the output port 4 for outputting light signal of output level controlled by the variable optical attenuator controller 7. Further, the pumping light multiplexer 11 for multiplexing pumping light for exciting the optical amplification rare earth addition fiber 2, and the pumping source 10 are provided in the front direction of the optical amplification rare earth addition fiber 2. Such the optical detection constitution is characteristic of the ninth embodiment of the gain-flattening optical amplifier. In this constitution of the gain-flattening optical amplifier, it is capable of realizing gain equalization function in such a way that the pumping source driver 13 controls magnitude of the pumping light from the pumping source 10 on the basis of the level difference information of the comparator 8.

As described above, according to the tenth embodiment, following effect is obtained. A first effect is that when total level of the light signal inputted to the gain-flattening optical amplifier is changed, the tenth embodiment has a function of automatic gain equalization. When optical level inputted to the gain-flattening optical amplifier is changed in answer to temperature characteristic, the tenth embodiment has a function of automatic gain equalization. Further also gain-flattening characteristic is obtained, therefore, it is capable of diminishing the gain tilt on the occasion of the wavelength division multiplexing transmission (WDM transmission). Further, a second effect is that when the gain-flattening control is executed, the output constant control also can be executed. Furthermore, a third effect is that the conventional gain-equalizing method performs the optimum design in every transmission system, however, in the present gain-flattening optical amplifier performs gain equalization in every gain-flattening optical amplifier, therefore, the system design becomes easy.

### (ELEVENTH EMBODIMENT)

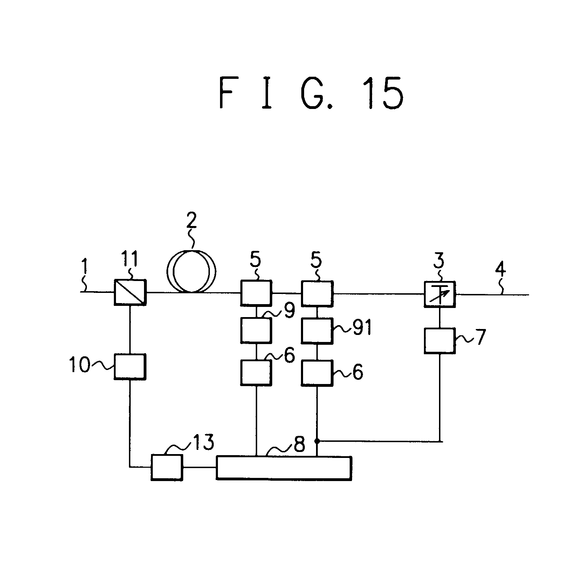

Fig. 15 is a circuit block diagram for explaining a gain-flattening optical amplifier according to an eleventh embodiment of the present invention. In Fig. 15, the gain-flattening optical amplifier of the present embodiment comprises the input port 1 of the gain-flattening optical amplifier for inputting therein optical input signal, the optical amplification rare earth addition fiber 2 for amplifying to be outputted the inputted light signal, the variable optical attenuator 3 which operates with prescribed time constant on the occasion of outputting the inputted light while attenuating the inputted light by prescribed quantity, the pumping source 10 for generating to be outputted the pumping light, the pumping source driver 13 which operates with prescribed time constant on the occasion of driving the pumping source 10, the pumping light multiplexer 11 for multiplexing the pumping light which the pumping source 10 generates to be outputted, in order to excite the optical amplification rare earth addition fiber 2, optical branching means 5, 5 for branching optical output level provided in series in the direction of transmission path, the optical bandwidth limiters 9, 91 for selecting wavelength of the branching signal light from the respective optical branching means 5, 5, a plurality of the photo-detectors 6, ···, 6 for generating to be outputted optical level information while converting (light-electricity conversion) signal light passed through the optical bandwidth limiters 9, 91 into electric signal, the comparator 8 for generating to be outputted level difference information while comparing electric signals (optical level information) which the respective photo-detectors generate to be outputted, the variable optical attenuator controller 7 for controlling the variable optical attenuator 3 on the basis of the optical level information which the respective photo-detectors 6, ···, 6 generate to be outputted, in order to harmonize output level of the gain-flattening optical amplifier, and the output port 4 for outputting light signal of output level controlled by the variable optical attenuator controller 7. There is provided two groups in series in the direction of transmission path, and each one of the two groups consists of one optical branching means, one optical bandwidth limiter, and one photo-detector. Further, the pumping light multiplexer 11 for multiplexing pumping light for exciting the optical amplification rare earth addition fiber 2, and the pumping source 10 are provided in the front direction of the optical amplification rare earth addition fiber 2. Such the optical detection constitution is characteristic of the eleventh embodiment of the gain-flattening optical amplifier. In this constitution of the gain-flattening optical amplifier, it is capable of realizing gain equalization function in such a way that the pumping source driver 13 controls magnitude of the pumping light from the pumping source 10 on the basis of the level difference information of the comparator 8.

As described above, according to the eleventh embodiment, following effect is obtained. A first effect is that when total level of the light signal inputted to the gain-flattening optical amplifier is changed, the eleventh embodiment has a function of automatic gain equalization. When optical level inputted to the gain-flattening optical amplifier is changed in answer to temperature characteristics, the eleventh embodiment has a function of automatic gain equalization. Further also gain-flattening characteristic is obtained, therefore, it is capable of diminishing the gain tilt on the occasion of the wavelength division multiplexing transmission (WDM transmission). Further, a second effect is that when the gain-flattening control is executed, the output constant control also can be executed. Furthermore, a third effect is that the conventional gain-equalizing method performs the optimum design in every transmission system, however, in the present gain-flattening optical amplifier performs gain equalization in every gain-flattening optical amplifier, therefore, the system design becomes easy.

### (TWELFTH EMBODIMENT)

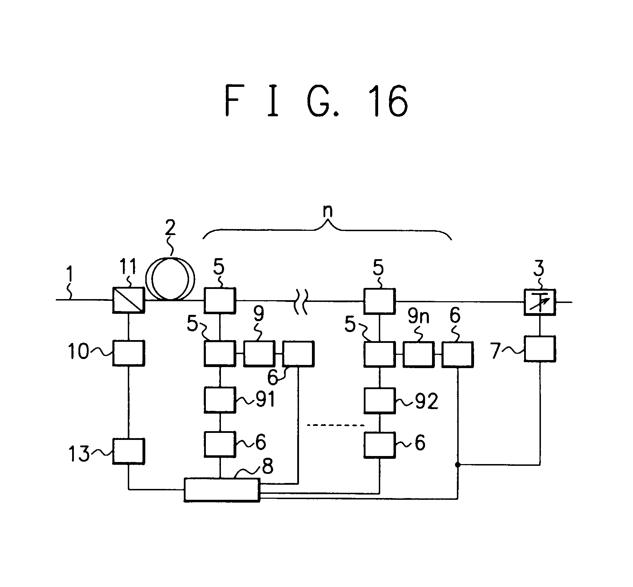

Fig. 16 is a circuit block diagram for explaining a gain-flattening optical amplifier according to a twelfth embodiment of the present invention. In Fig. 16, the gain-flattening optical amplifier of the present embodiment comprises the input port 1 of the gain-flattening optical amplifier for inputting therein optical input signal, the optical amplification rare earth addition fiber 2 for amplifying to be outputted the inputted light signal, the variable optical attenuator 3 which operates with prescribed time constant on the occasion of outputting the inputted light while attenuating the inputted light by prescribed quantity, the pumping source 10 for generating to be outputted the pumping light, the pumping source driver 13 which operates with prescribed time constant on the occasion of driving the pumping source 10, the pumping light multiplexer 11 for multiplexing the pumping light which the pumping source 10 generates to be outputted, in order to excite the optical amplification rare earth addition fiber 2, a plurality of optical branching means 5, ···, 5 for branching optical output level, the optical bandwidth limiters 91, 92, ···, 9n for selecting wavelength of the branching signal light from the respective optical branching means 5, ···, 5, a plurality of the photo-detectors 6, ···, 6 for generating to be outputted optical level information while converting (light-electricity conversion) signal light passed through the optical bandwidth limiters 91, 92, ···, 9n, into electric signal, here these a plurality of optical branching means 5, ···, 5, the optical bandwidth limiters 91, 92, ···, 9n, and a plurality of the photo-detectors 6, ···, 6 are constituted as "n" groups of optical branching means 5, photo-detectors 6, and optical bandwidth limiter 9 as shown in Fig. 16. Respective "n" groups thereof are provided in series in the direction of transmission path, the comparator 8 for generating to be outputted level difference information while comparing electric signals (optical level information) which the respective photo-detectors generate to be outputted, the variable optical attenuator controller 7 for controlling the variable optical attenuator 3 on the basis of the optical level information which the respective photo-detectors 6, ···, 6 generate to be outputted, in order to harmonize output level of the gain-flattening optical amplifier, and the output port 4 for outputting light signal of output level controlled by the variable optical attenuator controller 7. These a plurality of optical branching means, the optical bandwidth limiters, and a plurality of the photo-detectors are constituted as a plurality of respective groups which are provided in series in the direction of transmission path respectively. Further, the pumping light multiplexer 11 for multiplexing pumping light for exciting the optical amplification rare earth addition fiber 2, and the pumping source 10 are provided in the front direction of the optical amplification rare earth addition fiber 2. Such the optical detection constitution is characteristic of the twelfth embodiment of the gain-flattening optical amplifier. In this constitution of the gain-flattening optical amplifier, it is capable of realizing gain equalization function in such a way that the pumping source driver 13 controls magnitude of the pumping light from the pumping source 10 on the basis of the level difference information of the comparator 8.

As described above, according to the twelfth embodiment, following effect is obtained. A first effect is that when total level of the light signal inputted to the gain-flattening optical amplifier is changed, the twelfth embodiment has a function of automatic gain equalization. When optical level inputted to the gain-flattening optical amplifier is changed in answer to temperature characteristic, the twelfth embodiment has a function of automatic gain equalization. Further also gain-flattening characteristic is obtained, therefore, it is capable of diminishing the gain tilt on the occasion of the wavelength division multiplexing transmission (WDM transmission). Further, a second effect is that when the gain-flattening control is executed, the output constant control also can be executed. Furthermore, a third effect is that the conventional gain-equalizing method performs the optimum design in every transmission system, however, in the present gain-flattening optical amplifier performs gain equalization in every gain-flattening optical amplifier, therefore, the system design becomes easy.

### (THIRTEENTH EMBODIMENT)

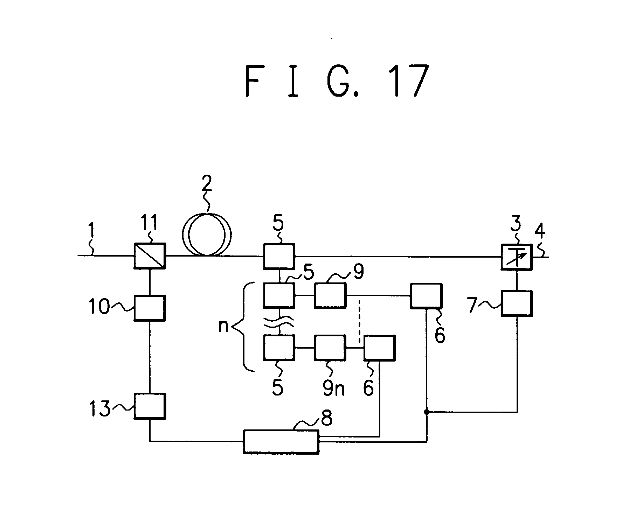

Fig. 17 is a circuit block diagram for explaining a gain-flattening optical amplifier according to a thirteenth embodiment of the present invention. Referring to Fig. 17, the gain-flattening optical amplifier of the present thirteenth embodiment comprises the input port 1 of the gain-flattening optical amplifier for inputting therein optical input signal, the optical amplification rare earth addition fiber 2 for amplifying to be outputted the inputted light signal, the variable optical attenuator 3 which operates with prescribed time constant on the occasion of outputting the inputted light while attenuating the inputted light by prescribed quantity, the pumping source 10 for generating to be outputted the pumping light, the pumping source driver 13 which operates with prescribed time constant on the occasion of driving the pumping source 10, the pumping light multiplexer 11 for multiplexing the pumping light which the pumping source 10 generates to be outputted, in order to excite the optical amplification rare earth addition fiber 2, a plurality of optical branching means 5, ···, 5 for branching optical output level, the optical bandwidth limiters 9, ···, 9n for selecting wavelength of the branching signal light from the respective optical branching means 5, ···, 5, a plurality of the photo-detectors 6, ···, 6 for generating to be outputted optical level information while converting (light-electricity conversion) signal light passed through the optical bandwidth limiters 9, ···, 9n into electric signal, the comparator 8 for generating to be outputted level difference information while comparing electric signals (optical level information) which the respective photo-detectors generate to be outputted, the variable optical attenuator controller 7 for controlling the variable optical attenuator 3 on the basis of the optical level information which the respective photo-detectors 6, ···, 6 generate to be outputted, in order to harmonize output level of the gain-flattening optical amplifier, the output port 4 for outputting light signal of output level controlled by the variable optical attenuator controller 7. There are provided a plurality of groups and the group consists of the optical branching means, the optical bandwidth limiter, and the photo-detector, arranged in parallel in the direction of the transmission path. Further, the pumping light multiplexer 11 for multiplexing pumping light for exciting the optical amplification rare earth addition fiber 2, and the pumping source 10 are provided in the front direction of the optical amplification rare earth addition fiber 2. Such the optical detection constitution of optical branching means 5, the optical bandwidth limiter 9, and the photo-detectors 6 are provided by "n" groups, that is characteristic of the thirteenth embodiment of the gain-flattening optical amplifier as shown in Fig. 17. In this constitution of the gain-flattening optical amplifier, it is capable of realizing gain equalization function in such a way that the pumping source driver 13 controls magnitude of the pumping light from the pumping source 10 on the basis of the level difference information of the comparator 8.

As described above, according to the thirteenth embodiment, following effect is obtained. A first effect is that when total level of the light signal inputted to the gain-flattening optical amplifier is changed, the thirteenth embodiment has a function of automatic gain equalization. When optical level inputted to the gain-flattening optical amplifier is changed in answer to temperature characteristics, the thirteenth embodiment has a function of automatic gain equalization. Further also gain-flattening characteristic is obtained, therefore, it is capable of diminishing the gain tilt on the occasion of the wavelength division multiplexing transmission (WDM transmission). Further, a second effect is that when the gain-flattening control is executed, the output constant control also can be executed. Furthermore, a third effect is that the conventional gain-equalizing method performs the optimum design in every transmission system, however, in the present gain-flattening optical amplifier performs gain equalization in every gain-flattening optical amplifier, therefore, the system design becomes easy.

### (FOURTEENTH EMBODIMENT)

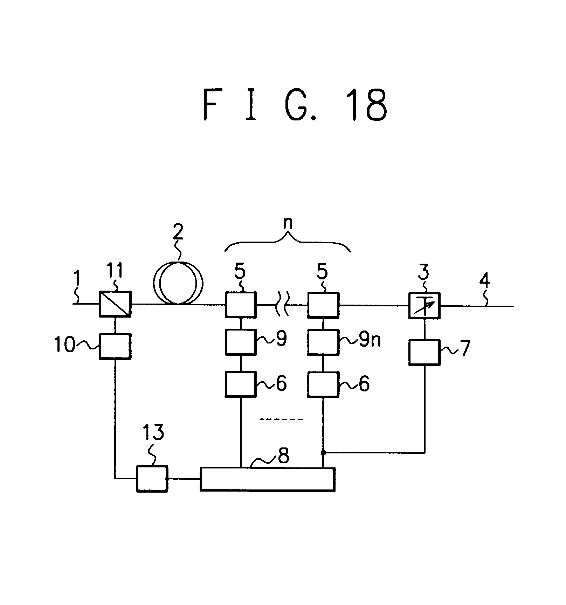

Fig. 18 is a circuit block diagram for explaining a gain-flattening optical amplifier according to a fourteenth embodiment of the present invention. Referring to Fig. 18, the gain-flattening optical amplifier of the present embodiment comprises the input port 1 of the gain-flattening optical amplifier for inputting therein optical input signal, the optical amplification rare earth addition fiber 2 for amplifying to be outputted the inputted light signal, the variable optical attenuator 3 which operates with prescribed time constant on the occasion of outputting the inputted light while attenuating the inputted light by prescribed quantity, the pumping source 10 for generating to be outputted the pumping light, the pumping source driver 13 which operates with prescribed time constant on the occasion of driving the pumping source 10, the pumping light multiplexer 11 for multiplexing the pumping light which the pumping source 10 generates to be outputted, in order to excite the optical amplification rare earth addition fiber 2, optical branching means 5, ···, 5 for branching optical output level, the optical bandwidth limiters 9, ···, 9n for selecting wavelength of the branching signal light from the respective optical branching means 5, ···, 5, a plurality of the photo-detectors 6, ···, 6 for generating to be outputted optical level information while converting (light-electricity conversion) signal light passed through the optical bandwidth limiters 9, ···, 9n into electric signal, the comparator 8 for generating to be outputted level difference information while comparing electric signals (optical level information) which the respective photo-detectors generate to be outputted, the variable optical attenuator controller 7 for controlling the variable optical attenuator 3 on the basis of the optical level information which the respective photo-detectors 6, ···, 6 generate to be outputted, in order to harmonize output level of the gain-flattening optical amplifier, the output port 4 for outputting light signal of output level controlled by the variable optical attenuator controller 7. There are provided a plurality of groups, and each group thereof consists of the optical branching means, the optical bandwidth limiter, and the photo-detector, in series in the direction of the transmission path. Further, the pumping light multiplexer 11 for multiplexing pumping light for exciting the optical amplification rare earth addition fiber 2, and the pumping source 10 are provided in the front direction of the optical amplification rare earth addition fiber 2. Such the optical detection constitution of the optical branching means 5, the optical bandwidth limiter 9, and the photo-detector 6 shown in Fig. 18 is characteristic of the fourteenth embodiment of gain-flattening optical amplifier. In this constitution of the gain-flattening optical amplifier, it is capable of realizing gain equalization function in such a way that the pumping source driver 13 controls magnitude of the pumping light from the pumping source 10 on the basis of the level difference information of the comparator 8.

As described above, according to the fourteenth embodiment, following effect is obtained. A first effect is that when total level of the light signal inputted to the gain-flattening optical amplifier is changed, the fourteenth embodiment has a function of automatic gain equalization. When optical level inputted to the gain-flattening optical amplifier is changed in answer to temperature characteristics, the fourteenth embodiment has a function of automatic gain equalization. Further also gain-flattening characteristic is obtained, therefore, it is capable of diminishing the gain tilt on the occasion of the wavelength division multiplexing transmission (WDM transmission). Further, a second effect is that when the gain-flattening control is executed, the output constant control also can be executed. Furthermore, a third effect is that the conventional gain-equalizing method performs the optimum design in every transmission system, however, in the present gain-flattening optical amplifier performs gain equalization in every gain-flattening optical amplifier, therefore, the system design becomes easy.

### (FIFTEENTH EMBODIMENT)

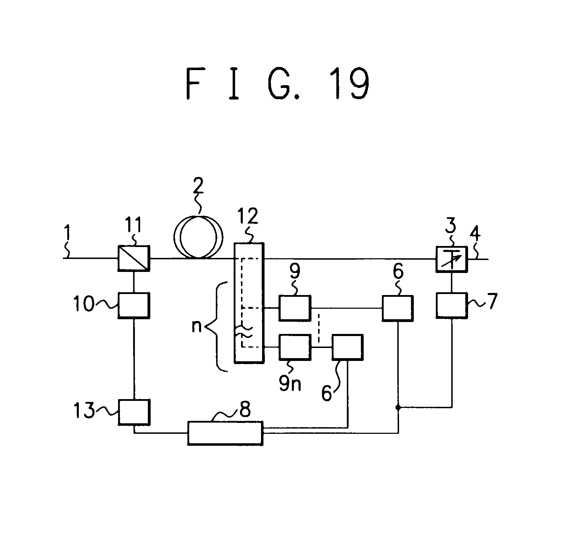

Fig. 19 is a circuit block diagram for explaining a gain-flattening optical amplifier according to a fifteenth embodiment of the present invention. Referring to Fig. 19, the gain-flattening optical amplifier of the present embodiment comprises the input port 1 of the gain-flattening optical amplifier for inputting therein optical input signal, the optical amplification rare earth addition fiber 2 for amplifying to be outputted the inputted light signal, the variable optical attenuator 3 which operates with prescribed time constant on the occasion of outputting the inputted light while attenuating the inputted light by prescribed quantity, the pumping source 10 for generating to be outputted the pumping light, the pumping source driver 13 which operates with prescribed time constant on the occasion of driving the pumping source 10, the pumping light multiplexer 11 for multiplexing the pumping light which the pumping source 10 generates to be outputted, in order to excite the optical amplification rare earth addition fiber 2, the optical bandwidth limiters 9, ···, 9n for selecting wavelength of the branching signal light from the respective optical demultiplexer 12, a plurality of the photo-detectors 6, ···, 6 for generating to be outputted optical level information while converting (light-electricity conversion) signal light passed through the optical bandwidth limiters 9, ···, 9n into electric signal, the comparator 8 for generating to be outputted level difference information while comparing electric signals (optical level information) which the respective photo-detectors generate to be outputted, the variable optical attenuator controller 7 for controlling the variable optical attenuator 3 on the basis of the optical level information which the respective photo-detectors 6, ···, 6 generate to be outputted, in order to harmonize output level of the gain-flattening optical amplifier, the output port 4 for outputting light signal of output level controlled by the variable optical attenuator controller 7. A group consists of optical bandwidth limiter and photo-detector, and a plurality of groups are connected to the one optical branching means respectively. Further, the pumping light multiplexer 11 for multiplexing pumping light for exciting the optical amplification rare earth addition fiber 2, and the pumping source 10 are provided in the front direction of the optical amplification rare earth addition fiber 2. Such the optical detection constitution of the wavelength limiters 9, ···, 9n and photo-detector 6, ···, 6 which are constituted in parallel in the direction of the transmission path as shown in Fig. 19 is characteristic of the fifteenth embodiment of the gain-flattening optical amplifier. In this constitution of the gain-flattening optical amplifier, it is capable of realizing gain equalization function in such a way that the pumping source driver 13 controls magnitude of the pumping light from the pumping source 10 on the basis of the level difference information of the comparator 8.

As described above, according to the fifteenth embodiment, following effect is obtained. A first effect is that when total level of the light signal inputted to the gain-flattening optical amplifier is changed, the fifteenth embodiment has a function of automatic gain equalization. When optical level inputted to the gain-flattening optical amplifier is changed in answer to temperature characteristic, the fifteenth embodiment has a function of automatic gain equalization. Further also gain-flattening characteristic is obtained, therefore, it is capable of diminishing the gain tilt on the occasion of the wavelength division multiplexing transmission (WDM transmission). Further, a second effect is that when the gain-flattening control is executed, the output constant control also can be executed. Furthermore, a third effect is that the conventional gain-equalizing method performs the optimum design in every transmission system, however, in the present gain-flattening optical amplifier performs gain equalization in every gain-flattening optical amplifier, therefore, the system design becomes easy.

### (SIXTEENTH EMBODIMENT)

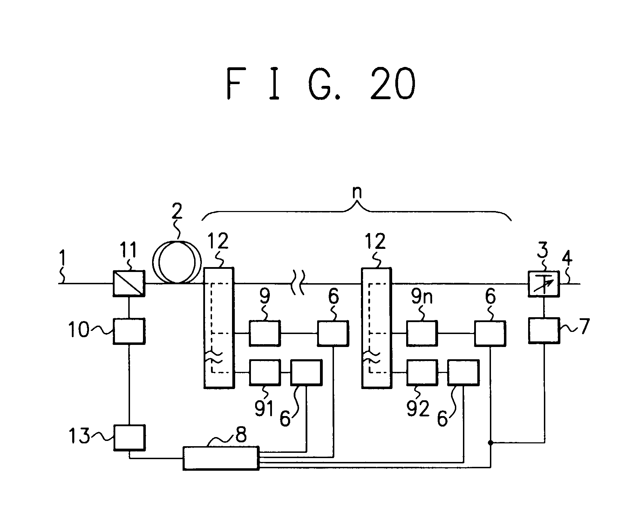

Fig. 20 is a circuit block diagram for explaining a gain-flattening optical amplifier according to a sixteenth embodiment of the present invention. Referring to Fig. 20, the gain-flattening optical amplifier of the present embodiment comprises the input port 1 of the gain-flattening optical amplifier for inputting therein optical input signal, the optical amplification rare earth addition fiber 2 for amplifying to be outputted the inputted light signal, the variable optical attenuator 3 which operates with prescribed time constant on the occasion of outputting the inputted light while attenuating the inputted light by prescribed quantity, the pumping source 10 for generating to be outputted the pumping light, the pumping source driver 13 which operates with prescribed time constant on the occasion of driving the pumping source 10, the pumping light multiplexer 11 for multiplexing the pumping light which the pumping source 10 generates to be outputted, in order to excite the optical amplification rare earth addition fiber 2, the optical bandwidth limiters 9, ···, 9n for selecting wavelength of the branching signal light from the respective optical demultiplexer 12, ···, 12, a plurality of the photo-detectors 6, ···, 6 for generating to be outputted optical level information while converting (light-electricity conversion) signal light passed through the optical bandwidth limiters 9, ···, 9n into electric signal, the comparator 8 for generating to be outputted level difference information while comparing electric signals (optical level information) which the respective photo-detectors generate to be outputted, the variable optical attenuator controller 7 for controlling the variable optical attenuator 3 on the basis of the optical level information which the respective photo-detectors 6, ···, 6 generate to be outputted, in order to harmonize output level of the gain-flattening optical amplifier, the output port 4 for outputting light signal of output level controlled by the variable optical attenuator controller 7. A plurality of groups are provided, and each one of the plurality groups consists of the one optical branching means, the plural optical bandwidth limiters, and the plural photo-detectors, in series in the direction of the transmission path. Further, the pumping light multiplexer 11 for multiplexing pumping light for exciting the optical amplification rare earth addition fiber 2, and the pumping source 10 are provided in the rear direction of the optical amplification rare earth addition fiber 2. Such the optical detection constitution of the optical demultiplexers 12, ···, 12, wavelength limiters 9, ···, 9n and photo-detector 6, ···, 6 which are constituted in series in the direction of the transmission path as shown in Fig. 20 is characteristic of the sixteenth embodiment of the gain-flattening optical amplifier. In this constitution of the gain-flattening optical amplifier, it is capable of realizing gain equalization function in such a way that the pumping source driver 13 controls magnitude of the pumping light from the pumping source 10 on the basis of the level difference information of the comparator 8.

As described above, according to the sixteenth embodiment, following effect is obtained. A first effect is that when total level of the light signal inputted to the gain-flattening optical amplifier is changed, the sixteenth embodiment has a function of automatic gain equalization. When optical level inputted to the gain-flattening optical amplifier is changed in answer to temperature characteristic, the sixteenth embodiment has a function of automatic gain equalization. Further also gain-flattening characteristic is obtained, therefore, it is capable of diminishing the gain tilt on the occasion of the wavelength division multiplexing transmission (WDM transmission). Further, a second effect is that when the gain-flattening control is executed, the output constant control also can be executed. Furthermore, a third effect is that the conventional gain-equalizing method performs the optimum design in every transmission system, however, in the present gain-flattening optical amplifier performs gain equalization in every gain-flattening optical amplifier, therefore, the system design becomes easy.

### (SEVENTEENTH EMBODIMENT)

Referring to Figs. 1 to 8, namely referring to the first to the eighth embodiment, in the gain-flattening optical amplifier of the present seventeenth embodiment, the pumping light multiplexer 11 for multiplexing pumping light for exciting the optical amplification rare earth addition fiber 2, the pumping source 10, and the optical amplification rare earth addition fiber 2 are provided bi-directionally. The optical detection constitution detects the pumping light bi-directionally. In the above seventeenth embodiment, duplicate explanation is omitted while the same signs are added in the same part as described already.

Lastly, there will be described technological difference and effect therebetween while comparing the present invention with the prior art. The Japanese Patent Application Laid-Open No. HEI 9-211507 discloses similar technology as the present invention. However, in the present invention, the wavelength compared for the sake of gain equalization is not necessarily to the shortest wavelength and the longest wavelength, thus, comparison is executed suitable wavelength for the characteristics of the rare earth addition fiber. Further, the gain-flattening amplifier of the present invention does not employ the wavelength multiplexing coupler but the optical bandwidth limiters 9, 91, 92, ···, 9n (for instance, fiber grating), therefore, one optical bandwidth limiter of the optical bandwidth limiters 9, 91, 92, ···, 9n detects only arbitrary one wavelength, thus it becomes possible to perform the gain control which is extremely accurate. On the other hand, in the case of the Japanese Patent Application Laid-Open No. HEI 9-211507, since another wavelength is included, it can be regarded that precision of the gain control is lower than that of the present invention. Furthermore, "optical output / optical branching" of the present invention is not wavelength branching but power branching of the light. As described above, it can be considered that constitution and effect of the present invention differs from that of the prior art.

As described above, according to the constitution of the present invention. A first effect is that when total level of the light signal inputted to the gain-flattening optical amplifier is changed, the present invention has a function of automatic gain equalization. When optical level inputted to the gain-flattening optical amplifier is changed in answer to temperature characteristic, the present invention has a function of automatic gain equalization. Further also gain-flattening characteristic is obtained, therefore, it is capable of diminishing the gain tilt on the occasion of the wavelength division multiplexing transmission (WDM transmission). Further, a second effect is that when the gain-flattening control is executed, the output constant control also can be executed. Furthermore, a third effect is that the conventional gain-equalizing method performs the optimum design in every transmission system, however, in the present gain-flattening optical amplifier performs gain equalization in every gain-flattening optical amplifier, therefore, the system design becomes easy.

While the invention has been particularly shown and described with reference to preferred embodiments thereof, it being understood that various changes in the operation, form, proportion and minor details of construction, within the scope of the claim, may be resorted to without departing from the spirit of the invention or sacrificing any of the advantages thereof. The description has been for illustrative purposes only, and it is to be understood that changes and variations may be made without departing from the spirit or scope of the following claims.

## Claims

1. A gain-flattening optical amplifier which enables a gain tilt to be diminished on the occasion of wavelength division multiplexing transmission, and which enables output constant control to be executed on the occasion of execution of gain-flattening control, further system design thereof is facilitated, comprising:
a means for monitoring a level of respective wavelengths; and
a means for canceling gain difference caused by wavelength gain dependability with respect to optical amplification while controlling quantity of pumping light generated from a pumping source which excites an optical amplification rare earth addition fiber such that level difference of said monitor of respective wavelengths is minimized.

2. A gain-flattening optical amplifier as claimed in claim 1, as an optical detection constitution, further comprising:
an input port of said gain-flattening optical amplifier for inputting a light input signal;
an optical amplification rare earth addition fiber for amplifying to be outputted said light signal inputted therein;
a variable optical attenuator which operates with prescribed time constant on the occasion of outputting input light while causing said input light to be attenuated by only prescribed quantity;
a pumping source for generating to be outputted pumping light;
a pumping source driver which operates with prescribed time constant on the occasion of driving said pumping source;
a pumping light multiplexer for multiplexing the pumping light which said pumping source generates to be outputted in order to excite said optical amplification rare earth addition fiber;
a plurality of optical branching means for branching optical output level;
a plurality of optical bandwidth limiters for selecting wavelength of the branching signal light from respective said optical branching means;
a plurality of photo-detectors for generating to be outputted optical level information while converting signal light passed through respective said optical bandwidth limiters into electric signal;
a comparator for generating to be outputted level difference information while comparing optical level information which respective said photo-detectors generate to be outputted;
a variable optical attenuator controller for controlling said variable optical attenuator on the basis of optical level information which respective said photo-detectors generate to be outputted in order to harmonize output level of said optical amplifier; and
an output port for outputting light signal with output level controlled by said variable optical attenuator controller,
wherein said pumping light multiplexer for multiplexing pumping light in order to excite said optical amplification rare earth addition fiber, and said pumping source are provided in the rear direction of said optical amplification rare earth addition fiber.

3. A gain-flattening optical amplifier as claimed in claim 1, as an optical constitution, further comprising:
an input port of said gain-flattening optical amplifier for inputting a light input signal;
an optical amplification rare earth addition fiber for amplifying to be outputted said light signal inputted therein;
a variable optical attenuator which operates with prescribed time constant on the occasion of outputting input light while causing said input light to be attenuated by only prescribed quantity;
a pumping source for generating to be outputted pumping light;
a pumping source driver which operates with prescribed time constant on the occasion of driving said pumping source;
a pumping light multiplexer for multiplexing the pumping light which said pumping source generates to be outputted in order to excite said optical amplification rare earth addition fiber;
an optical branching means for branching collectively optical output level;
a plurality of optical bandwidth limiters for selecting wavelength of the branching signal light from said optical branching means;
a plurality of photo-detectors for generating to be outputted optical level information while converting signal light passed through respective said optical bandwidth limiters into electric signal;
a comparator for generating to be outputted level difference information while comparing optical level information which respective said photo-detectors generate to be outputted;
a variable optical attenuator controller for controlling said variable optical attenuator on the basis of optical level information which respective said photo-detectors generate to be outputted in order to harmonize output level of said optical amplifier; and
an output port for outputting light signal with output level controlled by said variable optical attenuator controller,
wherein a group consisting of one optical branching means, two optical bandwidth limiters, and two photo-detectors is provided, further said pumping light multiplexer for multiplexing pumping light in order to excite said optical amplification rare earth addition fiber, and said pumping source are provided in the rear direction of said optical amplification rare earth addition fiber.

4. A gain-flattening optical amplifier as claimed in claim 1, as an optical detection constitution, further comprising:
an input port of said gain-flattening optical amplifier for inputting a light input signal;
an optical amplification rare earth addition fiber for amplifying to be outputted said light signal inputted therein;
a variable optical attenuator which operates with prescribed time constant on the occasion of outputting input light while causing said input light to be attenuated by only prescribed quantity;
a pumping source for generating to be outputted pumping light;
a pumping source driver which operates with prescribed time constant on the occasion of driving said pumping source;
a pumping light multiplexer for multiplexing the pumping light which said pumping source generates to be outputted in order to excite said optical amplification rare earth addition fiber;
two optical branching means arranged in series in the direction of transmission path for branching optical output level;
a plurality of optical bandwidth limiters for selecting wavelength of the branching signal light from said respective optical branching means;
a plurality of photo-detectors for generating to be outputted optical level information while converting signal light passed through respective said optical bandwidth limiters into electric signal;
a comparator for generating to be outputted level difference information while comparing optical level information which respective said photo-detectors generate to be outputted;
a variable optical attenuator controller for controlling said variable optical attenuator on the basis of optical level information which respective said photo-detectors generate to be outputted in order to harmonize output level of said optical amplifier; and
an output port for outputting light signal with output level controlled by said variable optical attenuator controller,
wherein there is provided two groups, and each one of said two groups consists of one optical branching means, one optical bandwidth limiter, and one photo-detector, in series in the direction of transmission path, further said pumping light multiplexer for multiplexing pumping light in order to excite said optical amplification rare earth addition fiber, and said pumping source are provided in the rear direction of the optical amplification rare earth addition fiber.

5. A gain-flattening optical amplifier as claimed in claim 1, as an optical detection constitution further comprising:
an input port of said gain-flattening optical amplifier for inputting a light input signal;
an optical amplification rare earth addition fiber for amplifying to be outputted said light signal inputted therein;
a variable optical attenuator which operates with prescribed time constant on the occasion of outputting input light while causing said input light to be attenuated by only prescribed quantity;
a pumping source for generating to be outputted pumping light;
a pumping source driver which operates with prescribed time constant on the occasion of driving said pumping source;
a pumping light multiplexer for multiplexing the pumping light which said pumping source generates to be outputted in order to excite said optical amplification rare earth addition fiber;
a plurality of optical branching means arranged in series in the direction of transmission path for executing optical branching in order to monitor different wavelength;
a plurality of optical bandwidth limiters for selecting wavelength of the branching signal light from said respective optical branching means;
a plurality of photo-detectors for generating to be outputted optical level information while converting signal light passed through respective said optical bandwidth limiters into electric signal;
a comparator for generating to be outputted level difference information while comparing optical level information which respective said photo-detectors generate to be outputted;
a variable optical attenuator controller for controlling said variable optical attenuator on the basis of optical level information which respective said photo-detectors generate to be outputted in order to harmonize output level of said optical amplifier; and
an output port for outputting light signal with output level controlled by said variable optical attenuator controller,
wherein these a plurality of optical branching means, the optical bandwidth limiters, and a plurality of the photo-detectors are constituted as a plurality of respective groups which are provided in series in the direction of transmission path respectively, furthermore, the pumping light multiplexer for multiplexing pumping light in order to excite the optical amplification rare earth addition fiber, and the pumping source are provided in the rear direction of the optical amplification rare earth addition fiber.

6. A gain-flattening optical amplifier as claimed in claim 1, as an optical detection constitution, further comprising:
an input port of said gain-flattening optical amplifier for inputting a light input signal;
an optical amplification rare earth addition fiber for amplifying to be outputted said light signal inputted therein;
a variable optical attenuator which operates with prescribed time constant on the occasion of outputting input light while causing said input light to be attenuated by only prescribed quantity;
a pumping source for generating to be outputted pumping light;
a pumping source driver which operates with prescribed time constant on the occasion of driving said pumping source;
a pumping light multiplexer for multiplexing the pumping light which said pumping source generates to be outputted in order to excite said optical amplification rare earth addition fiber;
a plurality of optical branching means for branching optical output level;
a plurality of optical bandwidth limiters for selecting wavelength of the branching signal light from respective said optical branching means;
a plurality of photo-detectors for generating to be outputted optical level information while converting signal light passed through respective said optical bandwidth limiters into electric signal;
a comparator for generating to be outputted level difference information while comparing optical level information which respective said photo-detectors generate to be outputted;
a variable optical attenuator controller for controlling said variable optical attenuator on the basis of optical level information which respective said photo-detectors generate to be outputted in order to harmonize output level of said optical amplifier; and
an output port for outputting light signal with output level controlled by said variable optical attenuator controller,
wherein there are provided a plurality of groups and said group consists of said optical branching means, said optical bandwidth limiter, and said photo-detector, arranged in parallel in the direction of the transmission path, further the pumping light multiplexer for multiplexing pumping light in order to excite the optical amplification rare earth addition fiber, and the pumping source are provided in the rear direction of the optical amplification rare earth addition fiber.

7. A gain-flattening optical amplifier as claimed in claim 1, as an optical detection constitution, further comprising:
an input port of said gain-flattening optical amplifier for inputting a light input signal;
an optical amplification rare earth addition fiber for amplifying to be outputted said light signal inputted therein;
a variable optical attenuator which operates with prescribed time constant on the occasion of outputting input light while causing said input light to be attenuated by only prescribed quantity;
a pumping source for generating to be outputted pumping light;
a pumping source driver which operates with prescribed time constant on the occasion of driving said pumping source;
a pumping light multiplexer for multiplexing the pumping light which said pumping source generates to be outputted in order to excite said optical amplification rare earth addition fiber;
a plurality of optical branching means for branching optical output level;
a plurality of optical bandwidth limiters for selecting wavelength of the branching signal light from respective said optical branching means;
a plurality of photo-detectors for generating to be outputted optical level information while converting signal light passed through respective said optical bandwidth limiters into electric signal;
a comparator for generating to be outputted level difference information while comparing optical level information which respective said photo-detectors generate to be outputted;
a variable optical attenuator controller for controlling said variable optical attenuator on the basis of optical level information which respective said photo-detectors generate to be outputted in order to harmonize output level of said optical amplifier; and
an output port for outputting light signal with output level controlled by said variable optical attenuator controller,
wherein there are provided a plurality of groups, and each group thereof consists of the optical branching means, the optical bandwidth limiter, and the photo-detector, in series in the direction of the transmission path, the pumping light multiplexer for multiplexing pumping light in order to excite the optical amplification rare earth addition fiber, and the pumping source are provided in the rear direction of said optical amplification rare earth addition fiber.

8. A gain-flattening optical amplifier as claimed in claim 1, as an optical constitution, further comprising:
an input port of said gain-flattening optical amplifier for inputting a light input signal;
an optical amplification rare earth addition fiber for amplifying to be outputted said light signal inputted therein;
a variable optical attenuator which operates with prescribed time constant on the occasion of outputting input light while causing said input light to be attenuated by only prescribed quantity;
a pumping source for generating to be outputted pumping light;
a pumping source driver which operates with prescribed time constant on the occasion of driving said pumping source;
a pumping light multiplexer for multiplexing the pumping light which said pumping source generates to be outputted in order to excite said optical amplification rare earth addition fiber;
two optical branching means for branching collectively optical output level;
a plurality of optical bandwidth limiters for selecting wavelength of the branching signal light from said two optical branching means;
a plurality of photo-detectors for generating to be outputted optical level information while converting signal light passed through respective said optical bandwidth limiters into electric signal;
a comparator for generating to be outputted level difference information while comparing optical level information which respective said photo-detectors generate to be outputted;
a variable optical attenuator controller for controlling said variable optical attenuator on the basis of optical level information which respective said photo-detectors generate to be outputted in order to harmonize output level of said optical amplifier; and
an output port for outputting light signal with output level controlled by said variable optical attenuator controller,
wherein a group consists of optical bandwidth limiter and photo-detector, and a plurality of groups are connected to the one optical branching means respectively, further, the pumping light multiplexer for multiplexing pumping light in order to excite the optical amplification rare earth addition fiber, and the pumping source are provided in the rear direction of the optical amplification rare earth addition fiber.

9. A gain-flattening optical amplifier as claimed in claim 1, as an optical constitution, further comprising:
an input port of said gain-flattening optical amplifier for inputting a light input signal;
an optical amplification rare earth addition fiber for amplifying to be outputted said light signal inputted therein;
a variable optical attenuator which operates with prescribed time constant on the occasion of outputting input light while causing said input light to be attenuated by only prescribed quantity;
a pumping source for generating to be outputted pumping light;
a pumping source driver which operates with prescribed time constant on the occasion of driving said pumping source;
a pumping light multiplexer for multiplexing the pumping light which said pumping source generates to be outputted in order to excite said optical amplification rare earth addition fiber;
two optical branching means for branching collectively optical output level;
a plurality of optical bandwidth limiters for selecting wavelength of the branching signal light from said two optical branching means;
a plurality of photo-detectors for generating to be outputted optical level information while converting signal light passed through respective said optical bandwidth limiters into electric signal;
a comparator for generating to be outputted level difference information while comparing optical level information which respective said photo-detectors generate to be outputted;
a variable optical attenuator controller for controlling said variable optical attenuator on the basis of optical level information which respective said photo-detectors generate to be outputted in order to harmonize output level of said optical amplifier; and
an output port for outputting light signal with output level controlled by said variable optical attenuator controller,
wherein a plurality of groups are provided, and each one of said plurality groups consists of said one optical branching means, the plural optical bandwidth limiters, and the plural photo-detectors, in series, in the direction of the transmission path, further, the pumping light multiplexer for multiplexing pumping light in order to excite the optical amplification rare earth addition fiber, and the pumping source are provided in the rear direction of the optical amplification rare earth addition fiber.

10. A gain-flattening optical amplifier as claimed in claim 1, as an optical detection constitution, further comprising:
an input port of said gain-flattening optical amplifier for inputting a light input signal;
an optical amplification rare earth addition fiber for amplifying to be outputted said light signal inputted therein;
a variable optical attenuator which operates with prescribed time constant on the occasion of outputting input light while causing said input light to be attenuated by only prescribed quantity;
a pumping source for generating to be outputted pumping light;
a pumping source driver which operates with prescribed time constant on the occasion of driving said pumping source;
a pumping light multiplexer for multiplexing the pumping light which said pumping source generates to be outputted in order to excite said optical amplification rare earth addition fiber;
a plurality of optical branching means for branching optical output level;
a plurality of optical bandwidth limiters for selecting wavelength of the branching signal light from respective said optical branching means;
a plurality of photo-detectors for generating to be outputted optical level information while converting signal light passed through respective said optical bandwidth limiters into electric signal;
a comparator for generating to be outputted level difference information while comparing optical level information which respective said photo-detectors generate to be outputted;
a variable optical attenuator controller for controlling said variable optical attenuator on the basis of optical level information which respective said photo-detectors generate to be outputted in order to harmonize output level of said optical amplifier; and
an output port for outputting light signal with output level controlled by said variable optical attenuator controller,
wherein said pumping light multiplexer for multiplexing pumping light in order to excite said optical amplification rare earth addition fiber, and said pumping source are provided in the front direction of said optical amplification rare earth addition fiber.

11. A gain-flattening optical amplifier as claimed in claim 1, as an optical constitution, further comprising:
an input port of said gain-flattening optical amplifier for inputting a light input signal;
an optical amplification rare earth addition fiber for amplifying to be outputted said light signal inputted therein;
a variable optical attenuator which operates with prescribed time constant on the occasion of outputting input light while causing said input light to be attenuated by only prescribed quantity;
a pumping source for generating to be outputted pumping light;
a pumping source driver which operates with prescribed time constant on the occasion of driving said pumping source;
a pumping light multiplexer for multiplexing the pumping light which said pumping source generates to be outputted in order to excite said optical amplification rare earth addition fiber;
an optical branching means for branching collectively optical output level;
a plurality of optical bandwidth limiters for selecting wavelength of the branching signal light from said optical branching means;
a plurality of photo-detectors for generating to be outputted optical level information while converting signal light passed through respective said optical bandwidth limiters into electric signal;
a comparator for generating to be outputted level difference information while comparing optical level information which respective said photo-detectors generate to be outputted;
a variable optical attenuator controller for controlling said variable optical attenuator on the basis of optical level information which respective said photo-detectors generate to be outputted in order to harmonize output level of said optical amplifier; and
an output port for outputting light signal with output level controlled by said variable optical attenuator controller,
wherein a group consisting of one optical branching means, two optical bandwidth limiters, and two photo-detectors is provided, further said pumping light multiplexer for multiplexing pumping light in order to excite said optical amplification rare earth addition fiber, and said pumping source are provided in the front direction of said optical amplification rare earth addition fiber.

12. A gain-flattening optical amplifier as claimed in claim 1, as an optical detection constitution, further comprising:
an input port of said gain-flattening optical amplifier for inputting a light input signal;
an optical amplification rare earth addition fiber for amplifying to be outputted said light signal inputted therein;
a variable optical attenuator which operates with prescribed time constant on the occasion of outputting input light while causing said input light to be attenuated by only prescribed quantity;
a pumping source for generating to be outputted pumping light;
a pumping source driver which operates with prescribed time constant on the occasion of driving said pumping source;
a pumping light multiplexer for multiplexing the pumping light which said pumping source generates to be outputted in order to excite said optical amplification rare earth addition fiber;
two optical branching means arranged in series in the direction of transmission path for branching optical output level;
a plurality of optical bandwidth limiters for selecting wavelength of the branching signal light from said respective optical branching means;
a plurality of photo-detectors for generating to be outputted optical level information while converting signal light passed through respective said optical bandwidth limiters into electric signal;
a comparator for generating to be outputted level difference information while comparing optical level information which respective said photo-detectors generate to be outputted;
a variable optical attenuator controller for controlling said variable optical attenuator on the basis of optical level information which respective said photo-detectors generate to be outputted in order to harmonize output level of said optical amplifier; and
an output port for outputting light signal with output level controlled by said variable optical attenuator controller,
wherein there is provided two groups in series in the direction of transmission path, and each one of the two groups consists of one optical branching means, one optical bandwidth limiter, and one photo-detector, further the pumping light multiplexer for multiplexing pumping light in order to excite the optical amplification rare earth addition fiber, and the pumping source are provided in the front direction of the optical amplification rare earth addition fiber.

13. A gain-flattening optical amplifier as claimed in claim 1, as an optical detection constitution further comprising:
an input port of said gain-flattening optical amplifier for inputting a light input signal;
an optical amplification rare earth addition fiber for amplifying to be outputted said light signal inputted therein;
a variable optical attenuator which operates with prescribed time constant on the occasion of outputting input light while causing said input light to be attenuated by only prescribed quantity;
a pumping source for generating to be outputted pumping light;
a pumping source driver which operates with prescribed time constant on the occasion of driving said pumping source;
a pumping light multiplexer for multiplexing the pumping light which said pumping source generates to be outputted in order to excite said optical amplification rare earth addition fiber;
a plurality of optical branching means arranged in series in the direction of transmission path for executing optical branching in order to monitor different wavelength;
a plurality of optical bandwidth limiters for selecting wavelength of the branching signal light from said respective optical branching means;
a plurality of photo-detectors for generating to be outputted optical level information while converting signal light passed through respective said optical bandwidth limiters into electric signal;
a comparator for generating to be outputted level difference information while comparing optical level information which respective said photo-detectors generate to be outputted;
a variable optical attenuator controller for controlling said variable optical attenuator on the basis of optical level information which respective said photo-detectors generate to be outputted in order to harmonize output level of said optical amplifier; and
an output port for outputting light signal with output level controlled by said variable optical attenuator controller,
wherein these a plurality of optical branching means, the optical bandwidth limiters, and a plurality of the photo-detectors are constituted as a plurality of groups which are provided in series in the direction of transmission path respectively, furthermore, said pumping light multiplexer for multiplexing pumping light in order to excite said optical amplification rare earth addition fiber, and said pumping source are provided in the front direction of said optical amplification rare earth addition fiber.

14. A gain-flattening optical amplifier as claimed in claim 1, as an optical detection constitution, further comprising:
an input port of said gain-flattening optical amplifier for inputting a light input signal;
an optical amplification rare earth addition fiber for amplifying to be outputted said light signal inputted therein;
a variable optical attenuator which operates with prescribed time constant on the occasion of outputting input light while causing said input light to be attenuated by only prescribed quantity;
a pumping source for generating to be outputted pumping light;
a pumping source driver which operates with prescribed time constant on the occasion of driving said pumping source;
a pumping light multiplexer for multiplexing the pumping light which said pumping source generates to be outputted in order to excite said optical amplification rare earth addition fiber;
a plurality of optical branching means for branching optical output level;
a plurality of optical bandwidth limiters for selecting wavelength of the branching signal light from respective said optical branching means;
a plurality of photo-detectors for generating to be outputted optical level information while converting signal light passed through respective said optical bandwidth limiters into electric signal;
a comparator for generating to be outputted level difference information while comparing optical level information which respective said photo-detectors generate to be outputted;
a variable optical attenuator controller for controlling said variable optical attenuator on the basis of optical level information which respective said photo-detectors generate to be outputted in order to harmonize output level of said optical amplifier; and
an output port for outputting light signal with output level controlled by said variable optical attenuator controller,
wherein there are provided a plurality of groups and the group consists of the optical branching means, the optical bandwidth limiter, and the photo-detector, arranged in parallel in the direction of the transmission path, further the pumping light multiplexer for multiplexing pumping light in order to excite the optical amplification rare earth addition fiber, and the pumping source are provided in the front direction of the optical amplification rare earth addition fiber.

15. A gain-flattening optical amplifier as claimed in claim 1, as an optical detection constitution, further comprising:
an input port of said gain-flattening optical amplifier for inputting a light input signal;
an optical amplification rare earth addition fiber for amplifying to be outputted said light signal inputted therein;
a variable optical attenuator which operates with prescribed time constant on the occasion of outputting input light while causing said input light to be attenuated by only prescribed quantity;
a pumping source for generating to be outputted pumping light;
a pumping source driver which operates with prescribed time constant on the occasion of driving said pumping source;
a pumping light multiplexer for multiplexing the pumping light which said pumping source generates to be outputted in order to excite said optical amplification rare earth addition fiber;
a plurality of optical branching means for branching optical output level;
a plurality of optical bandwidth limiters for selecting wavelength of the branching signal light from respective said optical branching means;
a plurality of photo-detectors for generating to be outputted optical level information while converting signal light passed through respective said optical bandwidth limiters into electric signal;
a comparator for generating to be outputted level difference information while comparing optical level information which respective said photo-detectors generate to be outputted;
a variable optical attenuator controller for controlling said variable optical attenuator on the basis of optical level information which respective said photo-detectors generate to be outputted in order to harmonize output level of said optical amplifier; and
an output port for outputting light signal with output level controlled by said variable optical attenuator controller,
wherein there are provided a plurality of groups, and each group thereof consists of the optical branching means, the optical bandwidth limiter, and the photo-detector, in series in the direction of the transmission path, the pumping light multiplexer for multiplexing pumping light in order to excite the optical amplification rare earth addition fiber, and the pumping source are provided in the front direction of said optical amplification rare earth addition fiber.

16. A gain-flattening optical amplifier as claimed in claim 1, as an optical constitution, further comprising:
an input port of said gain-flattening optical amplifier for inputting a light input signal;
an optical amplification rare earth addition fiber for amplifying to be outputted said light signal inputted therein;
a variable optical attenuator which operates with prescribed time constant on the occasion of outputting input light while causing said input light to be attenuated by only prescribed quantity;
a pumping source for generating to be outputted pumping light;
a pumping source driver which operates with prescribed time constant on the occasion of driving said pumping source;
a pumping light multiplexer for multiplexing the pumping light which said pumping source generates to be outputted in order to excite said optical amplification rare earth addition fiber;
two optical branching means for branching collectively optical output level;
a plurality of optical bandwidth limiters for selecting wavelength of the branching signal light from said two optical branching means;
a plurality of photo-detectors for generating to be outputted optical level information while converting signal light passed through respective said optical bandwidth limiters into electric signal;
a comparator for generating to be outputted level difference information while comparing optical level information which respective said photo-detectors generate to be outputted;
a variable optical attenuator controller for controlling said variable optical attenuator on the basis of optical level information which respective said photo-detectors generate to be outputted in order to harmonize output level of said optical amplifier; and
an output port for outputting light signal with output level controlled by said variable optical attenuator controller,
wherein a group consists of optical bandwidth limiter and photo-detector, and a plurality of groups are connected to the one optical branching means respectively, further, the pumping light multiplexer for multiplexing pumping light in order to excite the optical amplification rare earth addition fiber, and the pumping source are provided in the front direction of the optical amplification rare earth addition fiber.

17. A gain-flattening optical amplifier as claimed in claim 1, as an optical constitution, further comprising:
an input port of said gain-flattening optical amplifier for inputting a light input signal;
an optical amplification rare earth addition fiber for amplifying to be outputted said light signal inputted therein;
a variable optical attenuator which operates with prescribed time constant on the occasion of outputting input light while causing said input light to be attenuated by only prescribed quantity;
a pumping source for generating to be outputted pumping light;
a pumping source driver which operates with prescribed time constant on the occasion of driving said pumping source;
a pumping light multiplexer for multiplexing the pumping light which said pumping source generates to be outputted in order to excite said optical amplification rare earth addition fiber;
two optical branching means for branching collectively optical output level;
a plurality of optical bandwidth limiters for selecting wavelength of the branching signal light from said two optical branching means;
a plurality of photo-detectors for generating to be outputted optical level information while converting signal light passed through respective said optical bandwidth limiters into electric signal;
a comparator for generating to be outputted level difference information while comparing optical level information which respective said photo-detectors generate to be outputted;
a variable optical attenuator controller for controlling said variable optical attenuator on the basis of optical level information which respective said photo-detectors generate to be outputted in order to harmonize output level of said optical amplifier; and
an output port for outputting light signal with output level controlled by said variable optical attenuator controller,
wherein a plurality of groups are provided in series in the direction of the transmission path, and each one of said plurality groups consists of said one optical branching means, said plural optical bandwidth limiters, and said plural photo-detectors, further, said pumping light multiplexer for multiplexing pumping light in order to excite said optical amplification rare earth addition fiber, and said pumping source are provided in the front direction of said optical amplification rare earth addition fiber.

18. A gain-flattening optical amplifier as claimed in claim 1, as an optical detection constitution, further comprising:
an input port of said gain-flattening optical amplifier for inputting a light input signal;
an optical amplification rare earth addition fiber for amplifying to be outputted said light signal inputted therein;
a variable optical attenuator which operates with prescribed time constant on the occasion of outputting input light while causing said input light to be attenuated by only prescribed quantity;
a pumping source for generating to be outputted pumping light;
a pumping source driver which operates with prescribed time constant on the occasion of driving said pumping source;
a pumping light multiplexer for multiplexing the pumping light which said pumping source generates to be outputted in order to excite said optical amplification rare earth addition fiber;
a plurality of optical branching means for branching optical output level;
a plurality of optical bandwidth limiters for selecting wavelength of the branching signal light from respective said optical branching means;
a plurality of photo-detectors for generating to be outputted optical level information while converting signal light passed through respective said optical bandwidth limiters into electric signal;
a comparator for generating to be outputted level difference information while comparing optical level information which respective said photo-detectors generate to be outputted;
a variable optical attenuator controller for controlling said variable optical attenuator on the basis of optical level information which respective said photo-detectors generate to be outputted in order to harmonize output level of said optical amplifier; and
an output port for outputting light signal with output level controlled by said variable optical attenuator controller,
wherein said pumping light multiplexer for multiplexing pumping light for exciting the optical amplification rare earth addition fiber, the pumping source, and the optical amplification rare earth addition fiber are provided bi-directionally.

19. A gain-flattening optical amplifier as claimed in claim 1, as an optical constitution, further comprising:
an input port of said gain-flattening optical amplifier for inputting a light input signal;
an optical amplification rare earth addition fiber for amplifying to be outputted said light signal inputted therein;
a variable optical attenuator which operates with prescribed time constant on the occasion of outputting input light while causing said input light to be attenuated by only prescribed quantity;
a pumping source for generating to be outputted pumping light;
a pumping source driver which operates with prescribed time constant on the occasion of driving said pumping source;
a pumping light multiplexer for multiplexing the pumping light which said pumping source generates to be outputted in order to excite said optical amplification rare earth addition fiber;
an optical branching means for branching collectively optical output level;
a plurality of optical bandwidth limiters for selecting wavelength of the branching signal light from said optical branching means;
a plurality of photo-detectors for generating to be outputted optical level information while converting signal light passed through respective said optical bandwidth limiters into electric signal;
a comparator for generating to be outputted level difference information while comparing optical level information which respective said photo-detectors generate to be outputted;
a variable optical attenuator controller for controlling said variable optical attenuator on the basis of optical level information which respective said photo-detectors generate to be outputted in order to harmonize output level of said optical amplifier; and
an output port for outputting light signal with output level controlled by said variable optical attenuator controller,
wherein a group consisting of one optical branching means, two optical bandwidth limiters, and two photo-detectors is provided, further the pumping light multiplexer for multiplexing pumping light for exciting the optical amplification rare earth addition fiber, the pumping source, and the optical amplification rare earth addition fiber are provided bi-directionally.

20. A gain-flattening optical amplifier as claimed in claim 1, as an optical detection constitution, further comprising:
an input port of said gain-flattening optical amplifier for inputting a light input signal;
an optical amplification rare earth addition fiber for amplifying to be outputted said light signal inputted therein;
a variable optical attenuator which operates with prescribed time constant on the occasion of outputting input light while causing said input light to be attenuated by only prescribed quantity;
a pumping source for generating to be outputted pumping light;
a pumping source driver which operates with prescribed time constant on the occasion of driving said pumping source;
a pumping light multiplexer for multiplexing the pumping light which said pumping source generates to be outputted in order to excite said optical amplification rare earth addition fiber;
two optical branching means arranged in series in the direction of transmission path for branching optical output level;
a plurality of optical bandwidth limiters for selecting wavelength of the branching signal light from said respective optical branching means;
a plurality of photo-detectors for generating to be outputted optical level information while converting signal light passed through respective said optical bandwidth limiters into electric signal;
a comparator for generating to be outputted level difference information while comparing optical level information which respective said photo-detectors generate to be outputted;
a variable optical attenuator controller for controlling said variable optical attenuator on the basis of optical level information which respective said photo-detectors generate to be outputted in order to harmonize output level of said optical amplifier; and
an output port for outputting light signal with output level controlled by said variable optical attenuator controller,
wherein there is provided two groups, and each one of the two groups consists of one optical branching means, one optical bandwidth limiter, and one photo-detector, further, the pumping light multiplexer for multiplexing pumping light for exciting the optical amplification rare earth addition fiber, the pumping source, and the optical amplification rare earth addition fiber are provided bi-directionally.

21. A gain-flattening optical amplifier as claimed in claim 1, as an optical detection constitution further comprising:
an input port of said gain-flattening optical amplifier for inputting a light input signal;
an optical amplification rare earth addition fiber for amplifying to be outputted said light signal inputted therein;
a variable optical attenuator which operates with prescribed time constant on the occasion of outputting input light while causing said input light to be attenuated by only prescribed quantity;
a pumping source for generating to be outputted pumping light;
a pumping source driver which operates with prescribed time constant on the occasion of driving said pumping source;
a pumping light multiplexer for multiplexing the pumping light which said pumping source generates to be outputted in order to excite said optical amplification rare earth addition fiber;
a plurality of optical branching means arranged in series in the direction of transmission path for executing optical branching in order to monitor different wavelength;
a plurality of optical bandwidth limiters for selecting wavelength of the branching signal light from said respective optical branching means;
a plurality of photo-detectors for generating to be outputted optical level information while converting signal light passed through respective said optical bandwidth limiters into electric signal;
a comparator for generating to be outputted level difference information while comparing optical level information which respective said photo-detectors generate to be outputted;
a variable optical attenuator controller for controlling said variable optical attenuator on the basis of optical level information which respective said photo-detectors generate to be outputted in order to harmonize output level of said optical amplifier; and
an output port for outputting light signal with output level controlled by said variable optical attenuator controller,
wherein these a plurality of optical branching means, the optical bandwidth limiters, and a plurality of the photo-detectors are constituted as a plurality of groups which are provided in series in the direction of transmission path respectively, furthermore, said pumping light multiplexer for multiplexing pumping light for exciting the optical amplification rare earth addition fiber, the pumping source, and the optical amplification rare earth addition fiber are provided bi-directionally.

22. A gain-flattening optical amplifier as claimed in claim 1, as an optical detection constitution, further comprising:
an input port of said gain-flattening optical amplifier for inputting a light input signal;
an optical amplification rare earth addition fiber for amplifying to be outputted said light signal inputted therein;
a variable optical attenuator which operates with prescribed time constant on the occasion of outputting input light while causing said input light to be attenuated by only prescribed quantity;
a pumping source for generating to be outputted pumping light;
a pumping source driver which operates with prescribed time constant on the occasion of driving said pumping source;
a pumping light multiplexer for multiplexing the pumping light which said pumping source generates to be outputted in order to excite said optical amplification rare earth addition fiber;
a plurality of optical branching means for branching optical output level;
a plurality of optical bandwidth limiters for selecting wavelength of the branching signal light from respective said optical branching means;
a plurality of photo-detectors for generating to be outputted optical level information while converting signal light passed through respective said optical bandwidth limiters into electric signal;
a comparator for generating to be outputted level difference information while comparing optical level information which respective said photo-detectors generate to be outputted;
a variable optical attenuator controller for controlling said variable optical attenuator on the basis of optical level information which respective said photo-detectors generate to be outputted in order to harmonize output level of said optical amplifier; and
an output port for outputting light signal with output level controlled by said variable optical attenuator controller,
wherein there are provided a plurality of groups and a group consists of the optical branching means, the optical bandwidth limiter, and the photo-detector, arranged in parallel in the direction of the transmission path, further, the pumping light multiplexer for multiplexing pumping light for exciting the optical amplification rare earth addition fiber, the pumping source, and the optical amplification rare earth addition fiber are provided bi-directionally.

23. A gain-flattening optical amplifier as claimed in claim 1, as an optical detection constitution, further comprising:
an input port of said gain-flattening optical amplifier for inputting a light input signal;
an optical amplification rare earth addition fiber for amplifying to be outputted said light signal inputted therein;
a variable optical attenuator which operates with prescribed time constant on the occasion of outputting input light while causing said input light to be attenuated by only prescribed quantity;
a pumping source for generating to be outputted pumping light;
a pumping source driver which operates with prescribed time constant on the occasion of driving said pumping source;
a pumping light multiplexer for multiplexing the pumping light which said pumping source generates to be outputted in order to excite said optical amplification rare earth addition fiber;
a plurality of optical branching means for branching optical output level;
a plurality of optical bandwidth limiters for selecting wavelength of the branching signal light from respective said optical branching means;
a plurality of photo-detectors for generating to be outputted optical level information while converting signal light passed through respective said optical bandwidth limiters into electric signal;
a comparator for generating to be outputted level difference information while comparing optical level information which respective said photo-detectors generate to be outputted;
a variable optical attenuator controller for controlling said variable optical attenuator on the basis of optical level information which respective said photo-detectors generate to be outputted in order to harmonize output level of said optical amplifier; and
an output port for outputting light signal with output level controlled by said variable optical attenuator controller,
wherein there are provided a plurality of groups, and each group thereof consists of the optical branching means, the optical bandwidth limiter, and the photo-detector, in series in the direction of the transmission path, further, the pumping light multiplexer for multiplexing pumping light for exciting the optical amplification rare earth addition fiber, the pumping source, and the optical amplification rare earth addition fiber are provided bi-directionally.

24. A gain-flattening optical amplifier as claimed in claim 1, as an optical constitution, further comprising:
an input port of said gain-flattening optical amplifier for inputting a light input signal;
an optical amplification rare earth addition fiber for amplifying to be outputted said light signal inputted therein;
a variable optical attenuator which operates with prescribed time constant on the occasion of outputting input light while causing said input light to be attenuated by only prescribed quantity;
a pumping source for generating to be outputted pumping light;
a pumping source driver which operates with prescribed time constant on the occasion of driving said pumping source;
a pumping light multiplexer for multiplexing the pumping light which said pumping source generates to be outputted in order to excite said optical amplification rare earth addition fiber;
two optical branching means for branching collectively optical output level;
a plurality of optical bandwidth limiters for selecting wavelength of the branching signal light from said two optical branching means;
a plurality of photo-detectors for generating to be outputted optical level information while converting signal light passed through respective said optical bandwidth limiters into electric signal;
a comparator for generating to be outputted level difference information while comparing optical level information which respective said photo-detectors generate to be outputted;
a variable optical attenuator controller for controlling said variable optical attenuator on the basis of optical level information which respective said photo-detectors generate to be outputted in order to harmonize output level of said optical amplifier; and
an output port for outputting light signal with output level controlled by said variable optical attenuator controller,
wherein a group consists of optical bandwidth limiter and photo-detector, and a plurality of groups are connected to the one optical branching means respectively, further, the pumping light multiplexer for multiplexing pumping light for exciting the optical amplification rare earth addition fiber, the pumping source, and the optical amplification rare earth addition fiber are provided bi-directionally.

25. A gain-flattening optical amplifier as claimed in claim 1, as an optical constitution, further comprising:
an input port of said gain-flattening optical amplifier for inputting a light input signal;
an optical amplification rare earth addition fiber for amplifying to be outputted said light signal inputted therein;
a variable optical attenuator which operates with prescribed time constant on the occasion of outputting input light while causing said input light to be attenuated by only prescribed quantity;
a pumping source for generating to be outputted pumping light;
a pumping source driver which operates with prescribed time constant on the occasion of driving said pumping source;
a pumping light multiplexer for multiplexing the pumping light which said pumping source generates to be outputted in order to excite said optical amplification rare earth addition fiber;
two optical branching means for branching collectively optical output level;
a plurality of optical bandwidth limiters for selecting wavelength of the branching signal light from said two optical branching means;
a plurality of photo-detectors for generating to be outputted optical level information while converting signal light passed through respective said optical bandwidth limiters into electric signal;
a comparator for generating to be outputted level difference information while comparing optical level information which respective said photo-detectors generate to be outputted;
a variable optical attenuator controller for controlling said variable optical attenuator on the basis of optical level information which respective said photo-detectors generate to be outputted in order to harmonize output level of said optical amplifier; and
an output port for outputting light signal with output level controlled by said variable optical attenuator controller,
wherein a plurality of groups are provided in series in the direction of the transmission path, and each one of said plurality groups consists of said one optical branching means, said plural optical bandwidth limiters, and said plural photo-detectors, further, said pumping light multiplexer for multiplexing pumping light for exciting the optical amplification rare earth addition fiber, the pumping source, and the optical amplification rare earth addition fiber are provided bi-directionally.
